(19)

Europäisches Patentamt
European Patent Office
Office européen des brevets

(11)    EP 2 219 283 A1

(12)    **EUROPEAN PATENT APPLICATION**
published in accordance with Art. 153(4) EPC

(43) Date of publication:
18.08.2010  Bulletin 2010/33

(51) Int Cl.:
*H02K 1/06* (2006.01)      *H02K 21/14* (2006.01)

(21) Application number: 08828831.1

(22) Date of filing: 27.08.2008

(86) International application number:
PCT/JP2008/065238

(87) International publication number:
WO 2009/028522 (05.03.2009 Gazette 2009/10)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 29.08.2007  JP 2007222778
13.02.2008  JP 2008031639
25.07.2008  JP 2008192468

(71) Applicant: Toyota Jidosha Kabushiki Kaisha
Toyota-shi, Aichi 471-8571 (JP)

(72) Inventors:
• KADOTA, Keisuke
Toyota-shi
Aichi 471-8571 (JP)
• AIHARA, Hideo
/ (JP)
• MITSUBAYASHI, Masahiko
Toyota-shi
Aichi 471-8571 (JP)

(74) Representative: Albutt, Anthony John
D Young & Co LLP
120 Holborn
London EC1N 2DY (GB)

(54)    **STEEL HAVING NON-MAGNETIC PORTION, ITS PRODUCING METHOD, AND REVOLVING ELECTRIC CORE**

(57)    Provided are a steel having a non-magnetic portion, which can be applied to the steel of the remaining portion irrespective of the material and which has a structure of a short treating time required and a determined depth direction, its manufacturing method, and a revolving electric core. There is prepared an electromagnetic steel sheet (10) having a recessed groove. A two-layered chip of a modifier metal foil and a stainless steel foil is so set in the groove of the electromagnetic steel sheet (10) that the electromagnetic steel sheet (10) and the stainless steel foil have surfaces of the same height. The modifier metal foil is melted when electric current is applied under pressure. When this pressing and current applying is continued, inner sides of the electromagnetic steel sheet (10) and the stainless steel foil contacting the modifier metal foil are melted to form a nonmagnetic alloy layer (2) in the region excepting the surface portions of an electromagnetic steel sheet layer (1) and a stainless steel layer (3). The nonmagnetic alloy layer (2) and the stainless steel layer (3) do not pass a magnetic flux.

FIG. 2

EP 2 219 283 A1

**Description**

Technical Field

The present invention relates to a steel suitable for use in a core of a revolving electric machine and the like and more particularly to a steel partly having a nonmagnetic portion, its producing method, and a revolving electric core.

Background Art

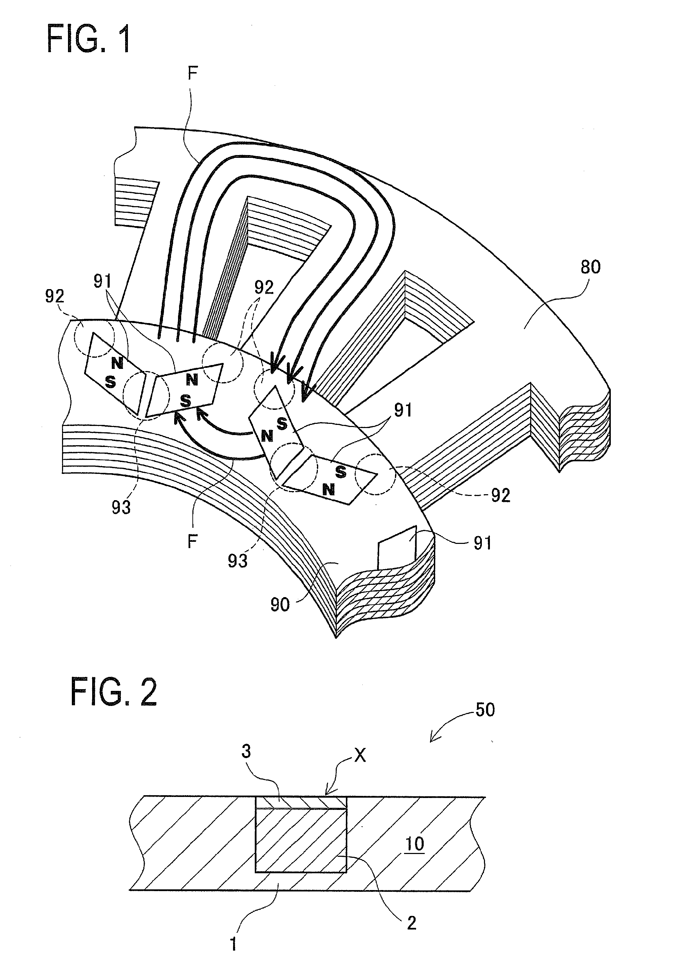

A core for use in an electric motor, a power generator, and others is usually required to provide a high magnetic permeability. However, the core includes some portions that will not form any effective magnetic paths due to placement of coils and magnets. For instance, in a stator 80 and a rotor 90 as shown in FIG. 1, magnets 91 are mounted in the rotor 90. In this rotor 90, peripheral bridge portions 92 and central bridge portions 93 will not form paths of effective magnetic flux F. The presence of core material in such portions rather deteriorates the performance by leakage flux. It is therefore preferable to increase magnetic resistance in those portions. However, because of the need for maintaining the strength of the entire rotor and stably holding the magnets 91, it is undesirable to form voids in those portions.

Therefore, the above portions of the core have heretofore partly been unmagnetized. For example, Patent Literature 1 discloses a technique of forming an austenite region by locally heating and then cooling the relevant portions of a core. Specifically, a ferromagnetic martensitic structure made of metastable austenite stainless steel by cold rolling is used as a base material. A part of this structure is transformed into a nonmagnetic austenite structure by that method. Patent Literature 1 mentions laser irradiation as a locally heating means. Furthermore, Patent Literature 2 discloses a technique of locally melting a target magnetic member and adding a modifying element to the target member from outside while melting so as to be made into solid solution, thereby making the target member nonmagnetic.

Citation List

Patent Literature

Patent Literature 1: Japanese Patent No. 3507395
Patent Literature 2: JP 2001-93717 A

Summary of Invention

Technical Problem

However, the above techniques have the following problems. The technique using the austenite stainless steel transformed to martensite in major portions of the core tends to cause crystal distortion or the like, resulting in lower magnetic permeability than general electromagnetic steel sheets. Thus, maximum flux density is insufficient. The technique of adding the modifying element to the target member in a melted state causes such problems that a long treating time is required and a nonmagnetic layer could not be formed as desired due to a difficulty in controlling the depth. There is also a problem that an increased volume of the target member by just that much of the added modifying element results in poor flatness after treatment.

The present invention has been made to solve the problems of the conventional techniques and has a purpose to provide a steel sheet having a nonmagnetic portion, applicable irrespective of the steel species of other portions than the nonmagnetic portion, requiring only a short treating time, and having a determined structure in a depth direction, its producing method, and a revolving electric core.

Solution to Problem

To achieve the above purposes, the present invention provides a steel having a nonmagnetic portion, wherein the nonmagnetic portion comprising: a surface steel layer placed on a front surface side; and a nonmagnetic alloy layer placed under the surface steel layer, a remaining portion of the nonmagnetic portion is a main steel layer constituted of the same material and structure as portions of the steel other than the nonmagnetic portion, and the main steel layer in the nonmagnetic portion has a thickness thinner than the total thickness of the steel in the portions other than the nonmagnetic portion. The steel has a high magnetic permeability in portions other than the nonmagnetic portion and therefore allows magnetic flux to pass therethrough. However, the nonmagnetic portion restrains the passage of the magnetic flux, thereby preventing local leakage of the magnetic flux.

In the above steel, preferably, the surface steel layer is an austenite stainless steel layer. Since the surface steel layer is nonmagnetic, accordingly, the leakage of magnetic flux can be reduced.

The above steel may be arranged such that a first main steel and a second main steel are laminated, the first main steel includes the main steel layer, the second main steel includes the surface steel layer, and the nonmagnetic alloy layer is formed to be embedded in both the first main steel and the second main steel. This configuration also can prevent the local leakage of magnetic flux as with the above configuration. Furthermore, no unjoined portion is generated.

In the steel having the nonmagnetic portion according to the present invention, a first main steel and a second main steel are laminated, the nonmagnetic portion is internally formed with a nonmagnetic alloy layer, and the nonmagnetic alloy layer is formed to be embedded in both the first main steel and the second main steel. This steel has a high magnetic permeability in portions other than the nonmagnetic portion and therefore allows magnetic flux to pass therethrough. However, the nonmagnetic portion restrains the passage of the magnetic flux, thereby preventing local leakage of the magnetic flux. In addition, no unjoined portion is generated and thus the steel can have sufficient strength.

In the above steel, the first main steel and the second main steel have a symmetrical shape with respect to respective mating surfaces. This steel also can prevent the local leakage of magnetic flux as with the above configuration. No unjoined portion is generated because the recess of the first main steel and the recess of the second main steel accurately face each other. This also causes no trouble in laminating the steels.

In the above steel, preferably, the nonmagnetic alloy layer has a volume resistivity larger than both a volume resistivity of the first main steel and a volume resistivity of the second main steel. This steel also can prevent the local leakage of magnetic flux as with the above configuration. No unjoined portion is generated. In the case of using this steel in a revolving electric core, energy loss caused by eddy current generated in the nonmagnetic alloy layer is low.

Furthermore, preferably, the nonmagnetic alloy layer is an alloy layer of an austenite phase containing an element capable of raising a melting point of the alloy layer. Accordingly, a melting point of the nonmagnetic alloy and a melting point of the steel are made close to each other. This configuration therefore can provide advantages during manufacture that the time for which the nonmagnetic alloy is melting can be reduced and also temperature controllability can be improved.

The present invention further provides a revolving electric core having a nonmagnetic portion, wherein the nonmagnetic portion comprising: a surface steel layer placed on a front surface side; and a nonmagnetic alloy layer placed under the surface steel layer, a remaining portion of the nonmagnetic portion is a main steel layer constituted of the same material and structure as portions of the steel other than the nonmagnetic portion, and the main steel layer in the nonmagnetic portion has a thickness thinner than the total thickness of the steel in the portions other than the nonmagnetic portion.

In the aforementioned revolving electric core, preferably, a plurality of magnet mounting holes are formed, the nonmagnetic portion is located between adjacent ones of the magnet mounting holes, and a portion at a shortest distance between the adjacent mounting magnet holes is located in the nonmagnetic portion. Even when an unjoined portion occurs between the wall surface of the nonmagnetic alloy layer or the surface steel layer and the wall surface of the main steel layer, it is not in a stress concentrated place and thus sufficient strength can be ensured.

In the aforementioned revolving electric core, preferably, a magnet mounting hole is formed, the nonmagnetic portion is located between the magnet mounting hole and an outer peripheral edge of the core, and a portion at a shortest distance between the magnet mounting hole and the outer peripheral edge is located in the nonmagnetic portion. This configuration also can ensure sufficient strength even when an unjoined portion occurs between the wall surface of the nonmagnetic alloy layer or the surface steel layer and the wall surface of the main steel layer.

In a revolving electric core having a nonmagnetic portion according to the present invention, the revolving electric core is configured by a lamination of steels each including a first main steel and a second main steel that are laminated, the nonmagnetic portion is internally formed with a nonmagnetic alloy layer, and the nonmagnetic alloy layer is formed to be embedded in both the first main steel and the second main steel. The revolving electric core having the nonmagnetic alloy layer has a high magnetic permeability in other portions than the nonmagnetic portion, thus allowing the magnetic flux to pass therethrough, but causing less magnetic flux leakage. Since no unjoined portion occurs, the revolving electric core can have sufficient strength.

In the revolving electric core, preferably, the nonmagnetic alloy layer has a volume resistivity larger than both a volume resistivity of the first main steel and a volume resistivity of the second main steel. This configuration also can have a high magnetic permeability in the portions other than the nonmagnetic portion, thus allowing the magnetic flux to pass therethrough, as with the above configuration. Furthermore, since no unjoined portion occurs, the revolving electric core can have sufficient strength. Energy loss caused by eddy current generated in the nonmagnetic alloy layer is also low.

A producing method of a steel having a nonmagnetic portion according to the invention comprises the steps of: inserting a cover steel and an alloy forming material that will form a nonmagnetic alloy in cooperation with Fe into a recess formed in a main steel so that the cover steel is placed as an upper layer, and applying electric current at the inserted portion to melt the alloy forming material together with a part of the main steel and a part of the cover steel to form a nonmagnetic alloy layer between a remaining part of the main steel and a remaining part of the cover steel. Since the alloy forming material has a low melting point, it is turned into a liquid phase in the course of heating. However, the cover steel serves as a cover of the liquid phase. This can prevents the metal in the liquid phase from adhering to energized electrodes.

In the above producing method of the steel having the nonmagnetic portion according to the invention, preferably, the cover steel is an austenite stainless steel. The austenite stainless steel has a melting point almost equal to that of the steel and is nonmagnetic. Accordingly, only the thickness of the nonmagnetic section of the nonmagnetic portion can be increased.

In the above producing method of the steel having the nonmagnetic portion according to the invention, preferably, the current application is conducted while a contact surface of an electrode on the side of the cover steel is in contact with only the cover steel. Accordingly, the cover steel and the alloy forming material can be efficiently heated.

Furthermore, a producing method of a steel having a nonmagnetic portion according to the invention comprises the steps of: laminating a plurality of steels including a first main steel and a second main steel each of which is provided with a recess in one surface so that the first and second main steels are located in both end places, the recess of the first main steel and the recess of the second main steel face each other, and an alloy forming material is disposed in a cavity defined by the recesses, and applying electric current at a portion of the recesses to melt the alloy forming material together with a part of the steels surrounding the alloy forming material to form a nonmagnetic alloy layer between a remaining part of the first main steel and a remaining part of the second main steel. In this producing method of the steel having the nonmagnetic portion, the first and second main steels also serve as the covers of the liquid phase. Accordingly, this also can prevent the metal in the liquid phase from adhering to energized electrodes. Thus, the steel having the nonmagnetic portion can be produced by laminating the plurality of the steels.

In the above producing method of the steel having the nonmagnetic portion, two, the first and the second main steels, are laminated. The first and second main steels can serve as the cover as with the above configuration. Thus, the steel having the nonmagnetic portion made of two laminated steels can be produced.

In the above producing method of the steel having the nonmagnetic portion, an alloy forming material is inserted in the recess of the first main steel and another alloy forming material is inserted in the recess of the second main steel, and the first and second main steels are laminated. The first and second main steels can serve as the cover as with the above configuration. In laminating the first and second main steels, the alloy forming material causes no galling or scuffing with another alloy forming material or the steel.

The above producing method of the steel having the nonmagnetic portion preferably comprises the steps of: inserting the alloy forming material in each of the recesses of the first and second main steels so that their recesses are placed to face upward, and inserting a ferromagnetic metal together with the alloy forming material in at least the recess of the second main steel so that the ferromagnetic metal is placed on the alloy forming material, placing a magnet under the recess of the second main steel to stick the second main steel and the alloy forming material together by the magnet and the ferromagnetic metal, and turning the second main steel upside down, and laminating the second main steel and the first main steel. This configuration can prevent the alloy forming material from dropping off the recess when the first and second main steels are laminated.

In the above producing method of the steel having the nonmagnetic portion, more preferably, the alloy forming material contains an element capable of raising a melting point of the alloy forming material. Since the melting point of the nonmagnetic alloy and the melting point of the steel are close to each other, the time for which the nonmagnetic alloy is melting is shorter. This can restrain a risk that the melted layer leaks outside and therefore improve controllability.

Advantageous Effects of Invention

According to the invention, there is provided a steel having a nonmagnetic portion, applicable irrespective of the steel species of other portions than the nonmagnetic portion, capable with a short treating time, and having a determined structure in a depth direction, its producing method, and a revolving electric core.

Brief Description of Drawings

FIG. 1 is a perspective view to explain a region that will not form any path of effective magnetic flux in a rotor of a revolving electric machine;
FIG. 2 is a sectional view showing a structure of a nonmagnetic portion of an electromagnetic steel sheet to be used in the rotor in the first embodiment;
FIG. 3 is a perspective view to explain a forming step (Part 1) of the nonmagnetic portion of the electromagnetic steel sheet to be used in the rotor in the first embodiment;

FIG. 4 is a sectional view to explain a forming step (Part 2) of the nonmagnetic portion of the electromagnetic steel sheet to be used in the rotor in the first embodiment;

FIG. 5 is a diagram including a sectional view and a graph showing a temperature distribution before the start of current application in the state shown in FIG. 4;

FIG. 6 is a diagram including a sectional view and a graph showing a temperature distribution after the start of current application (Part 1) in the state shown in FIG. 4;

FIG. 7 is a diagram including a sectional view and a graph showing a temperature distribution after the start of current application (Part 2) in the state shown in FIG. 4;

FIG. 8 is a diagram including a sectional view and a graph showing a temperature distribution before the start of current application (Part 3) in the state shown in FIG. 4;

FIG. 9 is a view to explain shunt currents generated in the case where a current applied portion is larger than a two-layered chip;

FIG. 10 is a view to explain the case where a current applied region is almost equal to or slightly smaller than the two-layered chip;

FIG. 11 is a view in a second embodiment, corresponding to FIG. 5;

FIG. 12 is a sectional view to explain the case where an unjoined portion occurs in a modified portion of the rotor;

FIG. 13 is a perspective view to explain a forming step (Part 1) of a nonmagnetic portion in a rotor in a third embodiment;

FIG. 14 is a view to explain a modified portion in the rotor in the third embodiment (Part 1);

FIG. 15 is a view to explain a modified portion in the rotor in the third embodiment (Part 2);

FIG. 16 is a view to explain a modified portion in the rotor in the third embodiment (Part 3);

FIG. 17 is a view to explain a modified portion in the rotor in the third embodiment (Part 4);

FIG. 18 is a sectional view showing a structure of a nonmagnetic portion of an electromagnetic steel sheet to be used in a rotor in a fourth embodiment (Part 1);

FIG. 19 is a sectional view to explain a producing process of the rotor in the fourth embodiment (Part 1);

FIG. 20 is a sectional view to explain the producing process of the rotor in the fourth embodiment (Part 2);

FIG. 21 is a sectional view to explain the producing process of the rotor in the fourth embodiment (Part 3);

FIG. 22 is a sectional view to explain the producing process of the rotor in the fourth embodiment (Part 4);

FIG. 23 is a sectional view to explain the producing process of the rotor in the fourth embodiment (Part 5);

FIG. 24 is a sectional view to explain the producing process of the rotor in the fourth embodiment (Part 6);

FIG. 25 is a sectional view to explain the producing process of the rotor in the fourth embodiment (Part 7);

FIG. 26 is a sectional view to explain the producing process of the rotor in the fourth embodiment (Part 8);

FIG. 27 is a sectional view to explain another producing process of a rotor in the fourth embodiment (Part 1);

FIG. 28 is a sectional view to explain another producing process of a rotor in the fourth embodiment (Part 2);

FIG. 29 is a sectional view to explain the rotor in the first embodiment and eddy current generated in its nonmagnetic portion;

FIG. 30 is a sectional view to explain the rotor in the fourth embodiment and eddy current generated in its nonmagnetic portion (Part 1);

FIG. 31 is a sectional view to explain the rotor in the fourth embodiment and eddy current generated in its nonmagnetic portion (Part 2);

FIG. 32 is a sectional view showing a structure of a nonmagnetic portion of an electromagnetic steel sheet to be used in the rotor in the fourth embodiment (Part 2);

FIG. 33 is a perspective view to explain a producing process of a rotor in a fifth embodiment (Part 1);

FIG. 34 is a sectional view to explain the producing process of the rotor in the fifth embodiment (Part 1);

FIG. 35 is a perspective view to explain the producing process of the rotor in the fifth embodiment (Part 2);

FIG. 36 is a sectional view to explain the producing process of the rotor in the fifth embodiment (Part 2);

FIG. 37 is a perspective view to explain the producing process of the rotor in the fifth embodiment (Part 3); and

FIG. 38 is a sectional view to explain the producing process of the rotor in the fifth embodiment (Part 3).

[Reference Signs List]

| 1: | Electromagnetic steel sheet layer |
| 2, 110, 210: | Nonmagnetic alloy layer |
| 3 | Stainless steel layer |
| 10, 20: | Electromagnetic steel sheet |
| 11: | Groove |

| 12: | Two-layered chip |
| 13: | Stainless steel foil |
| 14: | Modifier metal foil |
| 15: | Electrode |
| 16: | Liquid portion |
| 31: | Modifier metal foil |
| 32: | High resistance modifier metal foil |
| 33: | Ferromagnetic metal foil |
| 40: | Electromagnet |
| 50, 100, 200: | Electromagnetic steel sheet having nonmagnetic portion |
| 90, 190, 290: | Rotor |
| X: | Nonmagnetic portion |

Description of Embodiments

(First Embodiment)

A detailed description of preferred embodiments of the present invention will now be given referring to the accompanying drawings. A revolving electric machine in this embodiment includes nonmagnetic portions made by the steps explained below as peripheral bridge portions 92 and central bridge portions 93 of a rotor 90 shown in FIG. 1. Each central bridge portion 93 is a portion located between adjacent magnet-mounting holes. Each peripheral bridge portion 92 is a portion located between a magnet-mounting hole and an outer circumferential edge. Each of the rotor 90 and a stator 80 is made of a number of laminated electromagnetic steel sheets.

A structure of nonmagnetic portions in the rotor 90 in this embodiment is first explained. Each nonmagnetic portion in the rotor 90 has a cross section shown in FIG. 2. FIG. 2 is a sectional view of an electromagnetic steel sheet 50 including the nonmagnetic portion in the rotor 90. A nonmagnetic portion X in FIG. 2 is of a three-layer structure including an electromagnetic steel sheet layer 1, a nonmagnetic alloy layer 2, and a stainless steel layer 3. The electromagnetic steel sheet layer 1 is a main steel layer and the stainless steel layer 3 is a surface steel layer. The electromagnetic steel sheet layer 1 forms a lower surface in FIG. 2 and the stainless steel layer 3 forms an upper surface in FIG. 2. The nonmagnetic alloy layer 2 is located between them.

The electromagnetic steel sheet layer 1 is a part of an electromagnetic steel sheet 10 itself which is a main steel. The nonmagnetic alloy layer 2 is a nonmagnetic alloy layer in an austenite phase made of Fe as a main constituent with elemental additives of Mn, Ni, etc. The stainless steel layer 3 is an austenite stainless steel layer.

In the nonmagnetic portion X, only the electromagnetic steel sheet layer 1 is a magnetic body and the nonmagnetic alloy layer 2 and the stainless steel layer 3 are both nonmagnetic bodies. Accordingly, only the electromagnetic steel sheet layer 1 can serve to form effective magnetic paths in the nonmagnetic portion X. In other words, in the nonmagnetic portion X, only a very limited area of the whole electromagnetic steel sheet 10 in a thickness direction allows magnetic paths to be formed. Thus, such a portion can be regarded as a portion having a large magnetic resistance and being substantially nonmagnetic.

In all the electromagnetic steel sheets, each peripheral bridge portion 92 and each central bridge portion 93 in the rotor 90 shown in FIG. 1 are formed as nonmagnetic portions X shown in FIG. 2. Therefore, magnetic flux of each magnet 91 hardly passes through the peripheral bridge portions 92 and the central bridge portions 93. Accordingly, most of the magnetic flux of each magnet 91 is effective magnetic flux F. Other portions than the nonmagnetic portions X in the electromagnetic steel sheet 10 are made of commonly used Fe-Si alloy, which has a very high magnetic permeability. Thus, the revolving electric machine in this embodiment has a superior magnetic efficiency. In this embodiment, as above, the steel and the revolving electric core having the nonmagnetic portion superior in magnetic efficiency can be achieved.

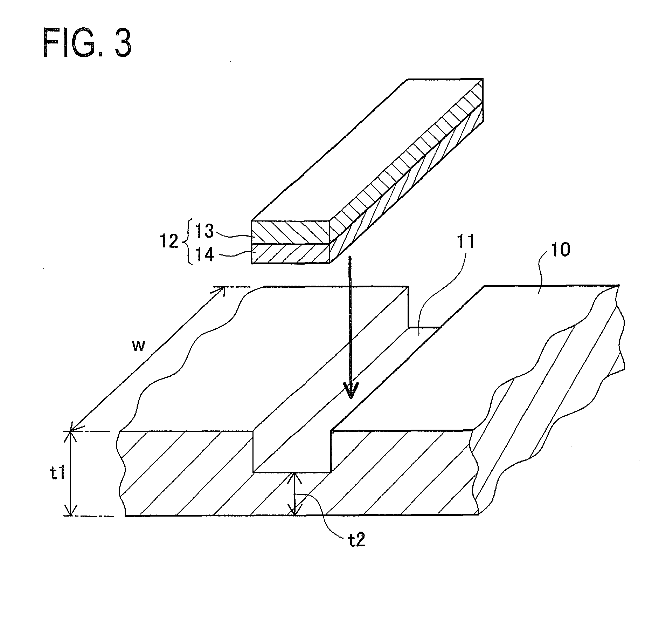

The steps of producing the nonmagnetic portion X are explained below. As shown in FIG. 3, firstly, a groove 11 is formed in a place where the nonmagnetic portion X is to be formed in the electromagnetic steel sheet 10. A method of forming the groove 11 may be conducted by a known technique such as cutting. The size and shape of the groove 11 can be selected according to a region of the nonmagnetic portion X to be formed.

If the thickness t1 of the electromagnetic steel sheet 10 is 0.3 mm, the thickness t2 of a part of the electromagnetic steel sheet 10 corresponding to the groove 11 is set to be about half thereof, 0.15 mm. In other words, the depth of the groove 11 is about half of the thickness of the electromagnetic steel sheet 10. This is very smaller than the total thickness of the nonmagnetic alloy layer 2 and the stainless steel layer 3 in FIG. 2. The reason thereof will be mentioned later. This represents that the thickness t2 of the part of the electromagnetic steel sheet 10 at the groove 11 is not so small. That is, the portion defining the groove 11 is not extremely weak. Accordingly, the electromagnetic steel sheet 10 formed with the groove 11 does not need to be handled so carefully. The width w in FIG. 3 corresponds to the width of the peripheral bridge portion 92 or the central bridge portion 93 in FIG. 1.

A two-layered chip 12 prepared in another process is inserted in the groove 11. The two-layered chip 12 is made of a stainless steel foil 13 and a modifier metal foil 14 integrally laminated one on the other. The material of the stainless steel foil 13 is for example an austenite stainless steel such as JIS-SUS 304. The stainless steel foil 13 is a cover steel for preventing leakage of the modifier metal foil 14 melted as mentioned later. The modifier metal foil 14 is an alloy forming material made of a metal of the kind that forms an austenite phase in combination with Fe or made of an alloy of such metal. As concrete materials, Ni, Mn, Ni-Mn alloy, and others can be used. In the following description, Ni-Mn is used unless particularly specified. The two-layered chip 12 is inserted in the groove 11 so that the stainless steel foil 13 is an upper layer.

The size of the two-layered chip 12 is determined so as to tightly fit in the groove 11. That is to say, the thickness of the two-layered chip 12 is equal to the depth of the groove 11. The thickness of the stainless steel foil 13 is almost equal to the thickness of the modifier metal foil 14. As compared with the thicknesses of the stainless steel layer 3 and the nonmagnetic alloy layer 2 in FIG. 2, the stainless steel foil 13 is thicker and the modifier metal foil 14 is thinner. The reason thereof will be explained below. When the two-layered chip 12 is inserted in the groove 11, the upper surface of the electromagnetic steel sheet 10 in FIG. 3 becomes a flush, flat surface.

The stainless steel foil 13 and the modifier metal foil 14 may be used without being integrally combined. Specifically, a single modifier metal foil 14 and a single stainless steel foil 13 may be inserted in order in the groove 11.

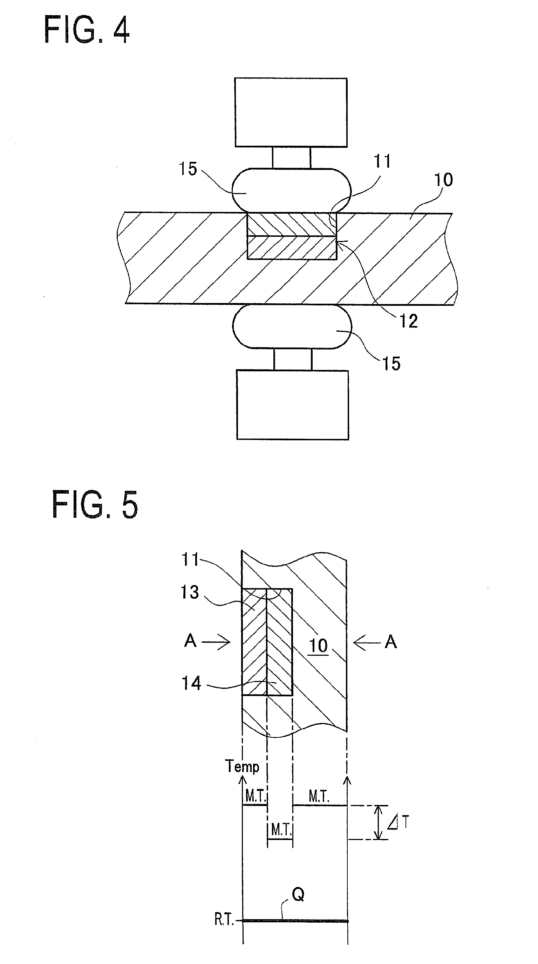

As shown in FIG. 4, the portion with the groove 11 in which the two-layered chip 12 is inserted is sandwiched from front and back sides by electrodes 15. In a similar manner as spot welding, an electric current is applied between the electrodes 15 while pressing the electrodes 15 against the portion. The pressure to be applied is set at about 0.15 MPa. A current value is set at about 10 kA per area (cm$^2$) of the two-layered chip 12. Resistance heating by this current melts the modifier metal foil 14. After the stop of current application, the melted metal solidifies again, forming the nonmagnetic alloy layer 2 shown in FIG. 2.

Herein, the details of a melting manner of the modifier metal foil 14 during current application will be explained. A temperature distribution in the depth direction in the portion with the groove 11 before the start of current application exhibits a room temperature (R.T.) throughout the thickness as shown by a curve Q in a lower graph in FIG. 5. This temperature distribution is obtained at a position indicated by an arrow A in an upper sectional view in FIG. 5. The "M.T." in the lower graph in FIG. 5 represents a melting point of each of the stainless steel foil 13, the modifier metal foil 14, and the electromagnetic steel sheet 10. As is clear from the view, the melting points of the stainless steel foil 13 and the electromagnetic steel sheet 10 are nearly equal, but the melting point of the modifier metal foil 14 is a little lower than them. A difference in melting point herein is expressed by "ΔT" in FIG. 5.

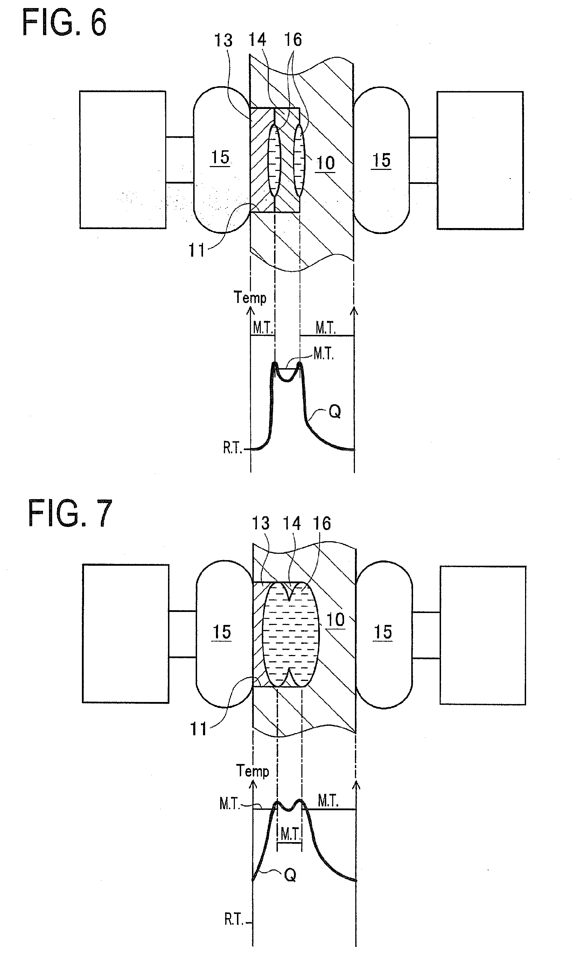

When current application is started, a boundary portion between the stainless steel foil 13 and the modifier metal foil 14 and a boundary portion between the modifier metal foil 14 and the electromagnetic steel sheet 10 will first rise in temperature because of contact resistance. Accordingly, the temperature distribution is as indicated by a curve Q in a lower graph in FIG. 6. This curve Q is based on a result of simulation. At that time, in the modifier metal foil 14, the vicinity of the portions contacting the stainless steel foil 13 or the electromagnetic steel sheet 10 early reaches its melting point and melts, thereby generating liquid portions 16. Upon generation of the liquid portions 16, parts of the stainless steel foil 13 and the electromagnetic steel sheet 10 contacting with the liquid portions 16 also gradually melt in the liquid portions 16. Accordingly, before the temperatures of the stainless steel foil 13 and the electromagnetic steel sheet 10 reach their melting points, the liquid portions 16 become embedded slightly into the stainless steel foil 13 and the electromagnetic steel sheet 10.

As the current application is continued, the liquid portions 16 spread as shown in FIG. 7. In this state, most part of the modifier metal foil 14 has already melted. The spreading of the liquid portions 16 toward the stainless steel foil 13 and the electromagnetic steel sheet 10 is larger than in FIG. 6.

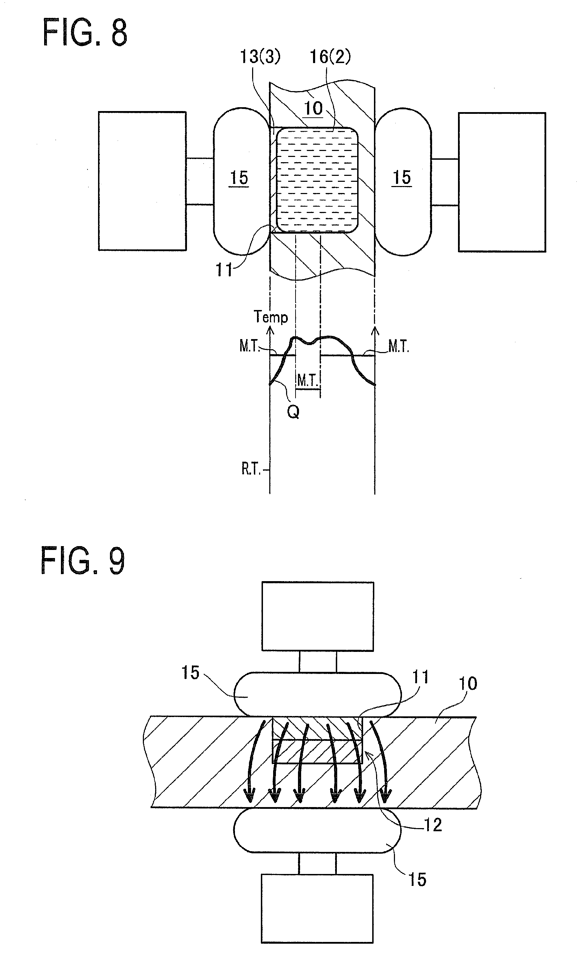

When the current application is further continued, the liquid portion 16 further spread as shown in FIG. 8. In this state, the modifier metal foil 14 has completely melted and is mixed with the electromagnetic steel sheet 10 and the stainless steel foil 13. The thickness of each of the stainless steel foil 13 and the electromagnetic steel sheet 10 at the groove 11 is remarkably smaller than the thickness before the start of current application in FIG. 5. However, the stainless steel foil 13 and the electromagnetic steel sheet 10 remain present without disappearing or becoming perforated with holes.

When the state shown in FIG. 8 is reached, no further heating is necessary. On the contrary, if heating is further continued, it is apt to perforate the stainless steel foil 13 and the electromagnetic steel sheet 10, causing melted metal of the liquid portion 16 to bond to the electrodes 15 or flow outside. Therefore, the current application is terminated at this stage. The temperature will then gradually decrease by heat radiation to the surrounding. The temperature decreasing causes the liquid portion 16 to solidify. At that time, no voids or holes are generated.

The composition of the liquid portion 16 in the state of FIG. 8 consists primarily of Fe and contains a considerable amount of Ni, Mn, and others deriving from the modifier metal foil 14. Thus, the liquid portion 16 when solidified is transformed into the austenite phase. This is nonmagnetic. The liquid portion 16 changes to the nonmagnetic alloy layer 2 shown in FIG. 2. Remaining unmelted portions of the stainless steel foil 13 and the electromagnetic steel sheet 10 form the stainless steel layer 3 and the electromagnetic steel sheet layer 1 in FIG. 2. In the above manner, the nonmagnetic portion X shown in FIG. 2 is created. Herein, the modifier metal foil 14 in FIG. 3 takes in parts of the electromagnetic steel plate 10 and of the stainless steel foil 13 to form the nonmagnetic alloy layer 2. The thickness of the nonmagnetic alloy layer 2 therefore becomes larger than the thickness of the modifier metal foil 14. The time from the start to the end of current application depends on the kind of the modifier metal foil 14, the thickness of each part, and others. Generally, about 1.8 seconds is appropriate. This time may be further shortened according to conditions.

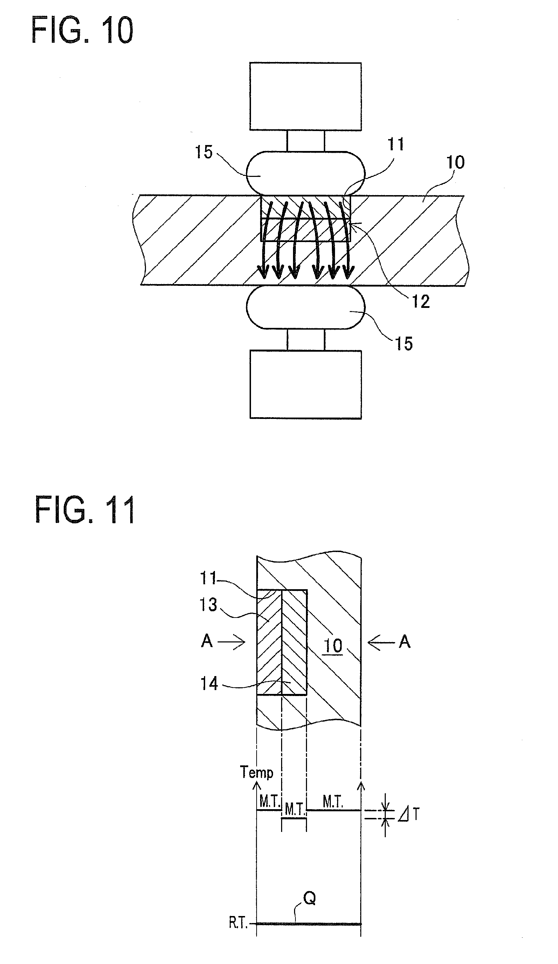

When the portion with the groove 11 in which the two-layered chip 12 is inserted is to be sandwiched from front and back sides by the electrodes 15 for current application, it is preferable to hold only the area of the two-layered chip 12 and the electromagnetic steel sheet layer 1 by the electrodes 15 and apply current only there as shown in FIG. 10. Accordingly, the shape of a contact surface of each electrode 15 is designed to be the same or slightly smaller than the surface of the two-layered chip 12. Thus, the electrode placed on a front surface side of the two-layered chip 12 makes contact with only the two-layered chip 12. Herein, the electrode placed on a back surface side of the two-layered chip may be somewhat larger than the two-layered chip. Consequently, a current hardly flows in the electromagnetic steel sheet 10 outside the groove 11 and mainly flows in the stainless steel foil 13 and the modifier metal foil 14. In the case where each electrode 15 has a large contact surface, shunt electric currents occur as shown in FIG. 9. Heat generated by the shunt currents is not effectively used. Thus, the temperature of each of the stainless steel foil 13 and the modifier metal foil 14 does not sufficiently rise and the nonmagnetic portion X could not be formed appropriately. To avoid such circumstances, the current application region is set appropriately. With this setting, the current hardly flows in the electromagnetic steel sheet 10 outside the groove 11 as shown in FIG. 10.

By using the above steps explained in detail, the present embodiment can achieve the producing method of the steel having the nonmagnetic portion providing the following advantages. Specifically, since only a portion intended to form the nonmagnetic portion X is heated by current application, other portions may be made of any material. Accordingly, for the electromagnetic steel sheet 10 itself, it is possible to select the kind of a material with a high regard for the magnetic permeability. Consequently, the rotor 90 having a good magnetic efficiency can be produced.

According to the initial depth of the groove 11, the thickness of the modifier metal foil 14, and others, it is possible to adjust the thickness of the nonmagnetic alloy layer 2 to be formed in the nonmagnetic portion X. Also, thicknesses of the nonmagnetic alloy layers 2 do not vary so large. It is therefore preferable to determine various conditions to make the nonmagnetic alloy layer 2 as thick as possible. This can minimize the thickness of the electromagnetic steel sheet layer 1 occupying the nonmagnetic portion X. Accordingly, ineffective magnetic flux can be reduced to a minimum. Since the shapes of the groove 11 and the two-layered chip 12 can be freely chosen, the region of the nonmagnetic portion X to be formed is not limited particularly.

When the initial size of the groove 11 and the size of the two-layered chip 12 are made equal, the volume hardly changes before and after heating. Consequently, the nonmagnetic portion X having no voids and a flat surface can be obtained. The presence of the nonmagnetic portion X causes little disadvantage in strength and trouble in lamination.

Furthermore, only the portion to be transformed into the nonmagnetic portion X is heated and the electromagnetic steel sheet 10 is not entirely heated. This needs only small electric power consumption. The nonmagnetic portion X can be formed in a similar manner to spot welding and in a short treating time. This is suitable for mass production.

(Second Embodiment)

A second embodiment of the present invention will be explained below. As with the first embodiment, an electromagnetic steel sheet 10 constituting a rotor 90 is formed with a recess, and a two-layered chip 12 including a stainless steel foil 13 and a modifier metal foil 14 is set in the recess as shown in FIG. 3. Also, as with the first embodiment, a portion in which the two-layered chip 12 is set is sandwiched and applied with electric current as shown in FIG. 4 to melt the modifier metal foil 14 and the interior portions of the stainless steel foil 13 and of the electromagnetic steel sheet 10, that is, in the same process as shown in the upper view in FIG. 6 to the upper view in FIG. 8. A three-layer structure is also formed after the temperature falls down as with the first embodiment. In other words, an electromagnetic steel sheet layer 1, a stainless steel layer 3, and a solidified nonmagnetic alloy layer 2 are formed.

A difference from the first embodiment is a modifier metal foil 14 made of a metal element such as Co or Rh as an auxiliary material in addition to the aforementioned component. For example, the auxiliary material is constituted of about 20% by volume of Co and about 5% by volume of Rh. This auxiliary material serves to raise a melting point of the modifier metal foil 14. Accordingly, the melting point of the modifier metal foil 14 can be adjusted to be slightly lower than the melting points of the electromagnetic steel sheet 10 and the stainless steel foil 13. FIG. 11 shows the case where the modifier metal foil 14 and the stainless steel foil 13 are inserted. A difference $\Delta T$ in melting point among the modifier metal foil 14 and the electromagnetic steel sheet 10 and the stainless steel foil 13 shown in a lower graph in FIG. 11 is smaller than that in FIG. 5. The second embodiment is directed to a steel with this difference $\Delta T$ being small, a producing method of the steel, and a revolving electric core.

Since the difference ΔT in melting point is small, the temperature at which the modifier metal foil 14 sandwiched and applied with current begins to melt is close to the melting points of the electromagnetic steel sheet 10 and the stainless steel foil 13. Therefore, the time from the melting start of the modifier metal foil 14 to the melting start of the electromagnetic steel sheet 10 and the stainless steel foil 13 is shorter than that in the first embodiment. That is, transition from the upper view in FIG. 6 to the upper view in FIG. 8 is achieved in a shorter time. Accordingly, the possibility of leakage of the molten metal to the outside through a gap between the stainless steel foil 13 and the electromagnetic steel sheet 10 is lower than in the first embodiment. This enhances controllability in a pressing and current applying process, improving adjustment of the depth of the nonmagnetic alloy layer 2 to be formed and control of the temperature of the molten metal. Higher quality can therefore be obtained.

It is to be understood that the present embodiment shows a mere example and does not limit the invention, and various changes and modifications may be made without departing from the scope of the invention. For instance, the stainless steel layer 3 is not limited to an austenite stainless steel. It may be an ordinary steel, an electromagnetic steel sheet, or the like if only it does not melt when energized. However, a nonmagnetic steel is more preferable. A portion of the chip corresponding to the modifier metal foil 14 may be formed of a plurality of foils in two or more layers. Naturally, a single layer may be adopted if only it contains an austenite stabilizing element. The metal(s) to be added in the modifier metal foil 14 for raising its melting point may be any metal(s) if only it is able to raise the melting point. The use of the steel having the nonmagnetic portion X is not limited to the revolving electric core. It may be applied to even a stator, a core of a transformer, or others if the presence of a nonmagnetic portion is effective.

(Third Embodiment)

A third embodiment of the invention will be explained below. A rotor 90 in this embodiment can rotate at high speed during use. At that time, a strong centrifugal force is exerted on an electromagnetic steel sheet 10 and a nonmagnetic portion X. Accordingly, it is necessary to ensure strength to withstand the centrifugal force. The rotor 90 is therefore desired to simultaneously have sufficient strength and prevent magnetic flux leakage in a nonmagnetic portion.

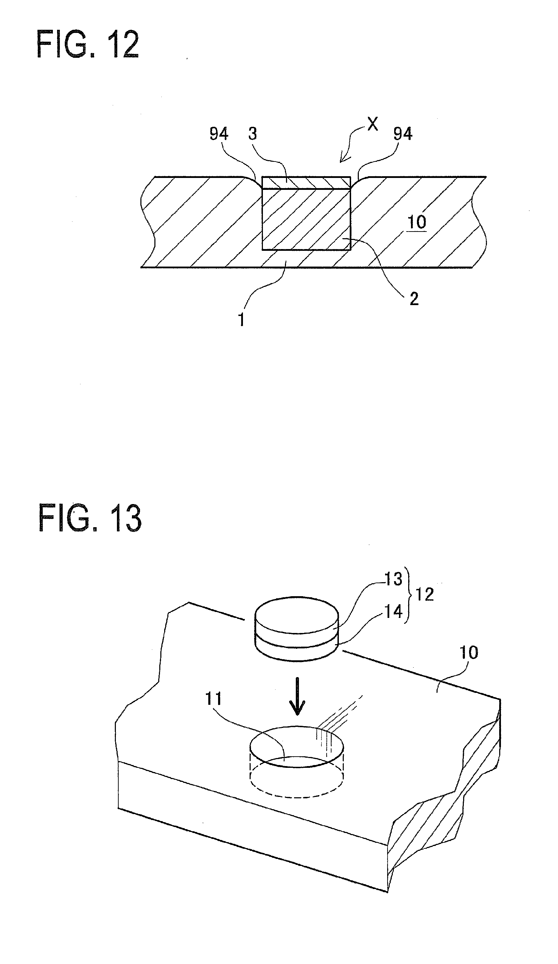

However, in a nonmagnetic alloy layer 2 and a stainless steel layer 3 to be formed after pressing and current applying, unjoined portions could be formed in a wall of a groove 11 as shown in FIG. 12. Specifically, unjoined portions 94 occur between the wall surfaces of the nonmagnetic alloy layer 2 and the stainless steel layer 3 and the electromagnetic steel sheet 10. When such unjoined portions 94 occur, stress resulting from the centrifugal force may concentrate on a slightly joined portion between the groove 11 and the two-layered chip 12. There is also a case where the force concentrates on only an electromagnetic steel sheet layer 1 according to a joining condition. In order to ensure constant strength even if such unjoined portions 94 occur, the electromagnetic steel sheet 10 used in the rotor 90 in this embodiment includes a two-layered chip 12 having a wide wall surface area.

A steel having a nonmagnetic portion in this embodiment and its producing method will be explained referring to FIG. 13. The electromagnetic steel sheet 10 in FIG. 13 corresponds to a part of the rotor 90. The material of a modifier metal foil 14 may be either one of that in the first embodiment and that in the second embodiment. The two-layered chip 12 including a stainless steel foil 13 and the modifier metal foil 14 is inserted in the groove 11 of the electromagnetic steel sheet 10 so that the stainless steel foil 13 is placed on the front surface side. After insertion of the two-layered chip 12, the upper side of the stainless steel layer 13 is almost flush with the upper side of the electromagnetic steel sheet 10.

Subsequently, as shown in FIG. 4, a portion at the groove 11 in which the two-layered chip 12 is inserted is sandwiched from front and back sides by electrodes 15. After that, an electric current is applied between the electrodes 15 while pressing the portion in a similar manner as spot welding. Pressure and a current value are the same as those in the first embodiment. Resistance heat generation by this current application causes the modifier metal foil 14 to melt. At that time, the process follows as shown in the upper view in FIG. 6 to the upper view in FIG. 8. The melted foil 14 solidifies again after the end of current application, forming the nonmagnetic alloy layer 2 shown in FIG. 2.

The process of melting of the electromagnetic steel sheet layer 1, the stainless steel foil 13, and the modifier metal foil 14 in this pressing and current applying operation are the same as in the first or second embodiment. After the end of pressing and current applying, the nonmagnetic portion X is formed of the nonmagnetic alloy layer 2 and the stainless steel layer 3 as shown in FIG. 2. Since the two-layered chip 12 has a wide wall surface area, the joining strength is sufficiently maintained even when some unjoined portions 94 occur as shown in FIG. 12 at that time. Because the two-layered chip has a sufficiently large size, a leakage amount of the magnetic flux is still small. In other words, even when the region of the nonmagnetic portion X is larger, the effective magnetic flux F is the same as that in the first and second embodiments.

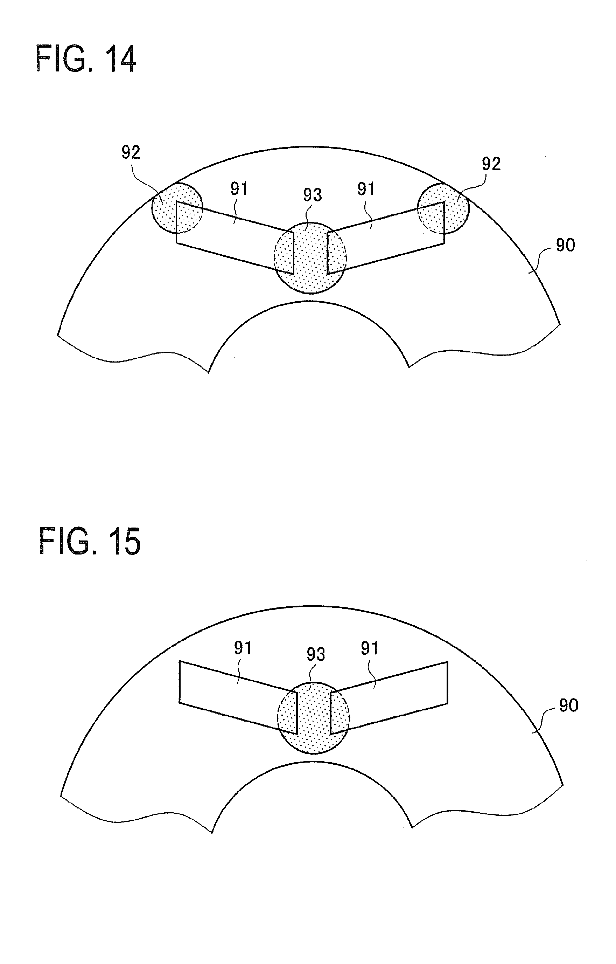

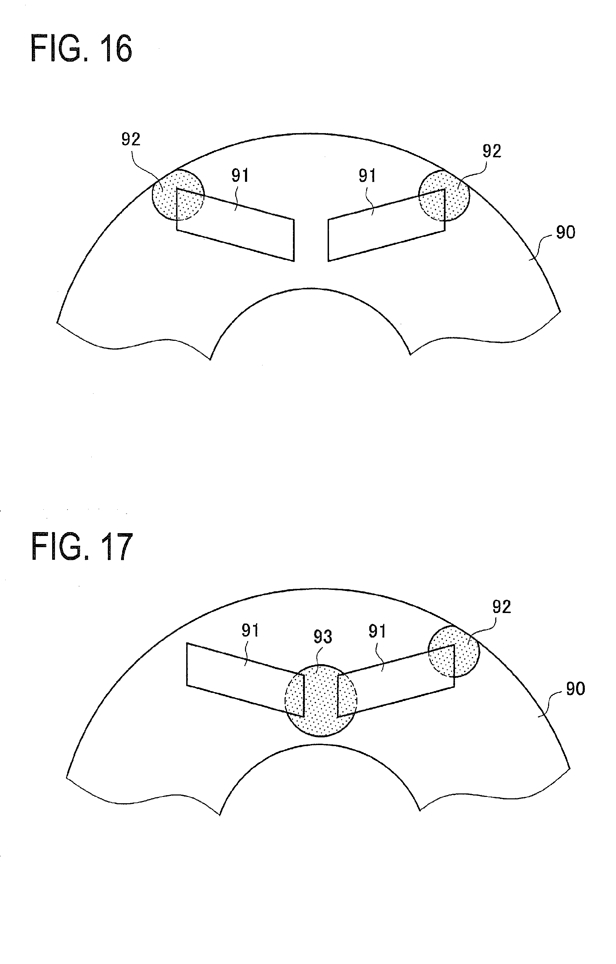

Herein, a portion of a steel sheet constituting the rotor 90, in which the nonmagnetic portion X is to be formed, will be explained with reference to FIGs. 14 to 17. FIGs. 14 to 17 correspond to top views of FIG. 1. FIG. 14 shows the nonmagnetic portions X provided in a central bridge portion 93 and peripheral bridge portions 92. FIG. 15 shows the nonmagnetic portion X provided in only the central bridge portion 93. FIG. 16 shows the nonmagnetic portions X provided in only the peripheral bridge portions 92. FIG. 17 shows the nonmagnetic portions X provided in the central bridge portion 93 and one of two peripheral bridge portions 92. In any of the above cases, the nonmagnetic portion X can reduce magnetic flux loss in the rotor 90.

As the details are explained above, the steel sheet to be used in the revolving motor in this embodiment includes the two-layered chip 12 having a sufficiently large size, thereby ensuring a joining area of the nonmagnetic alloy layer 2 and the stainless steel layer 3 with the electromagnetic steel sheet 10. Accordingly, the rotor 90 can be achieved with less loss of the effective magnetic flux F and with sufficient strength of the nonmagnetic portion X.

It is to be understood that the present embodiment shows a mere example and does not limit the invention, and various changes and modifications may be made without departing from the scope of the invention. For instance, the two-layered chip 12 and the groove 11 may be formed in a circular disc shape as shown in FIG. 13. It is therefore unnecessary to take account of the orientation of the two-layered chip 12 to be inserted, resulting in easy insertion of the two-layered chip 12. The shape of a contact face of each electrode 15 is also limited to a circular shape and hence many kinds of electrodes need not be prepared. Thus, the above configuration is suitable for mass production.

(Fourth Embodiment)

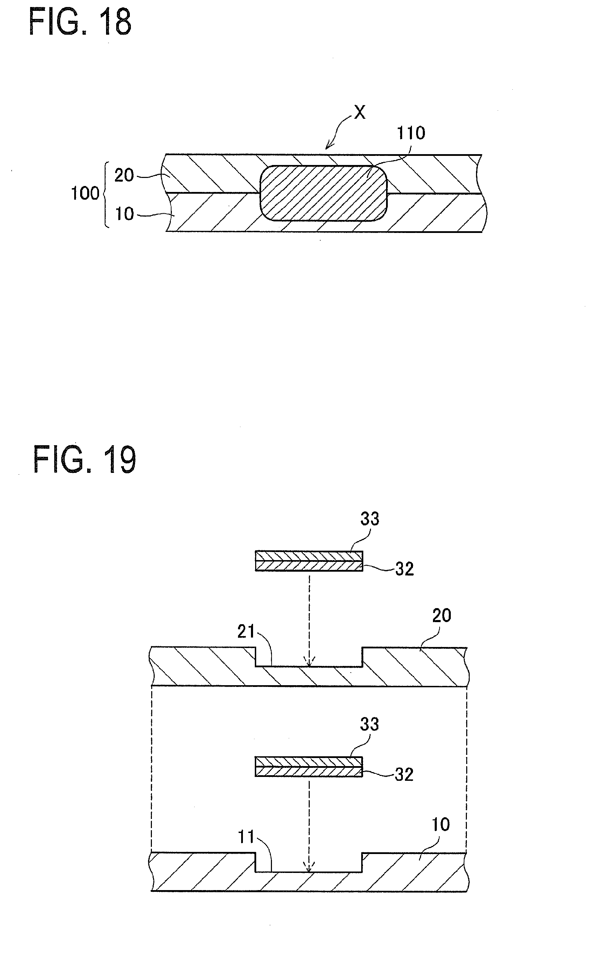

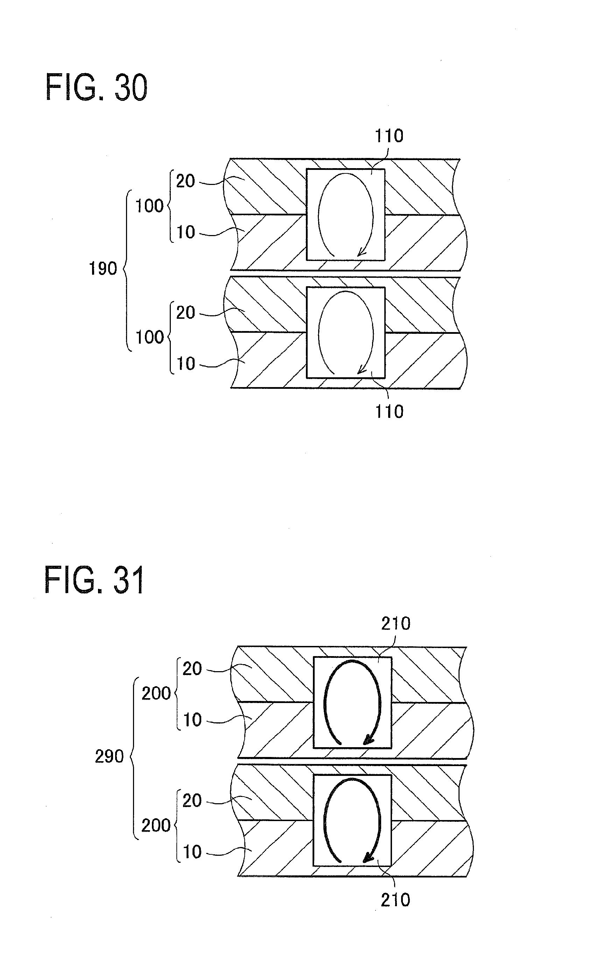

A fourth embodiment of the invention will be explained below. An electromagnetic steel sheet 100 having a nonmagnetic portion to be used in a rotor 190 (see FIG. 30) in this embodiment is made of two electromagnetic steel sheets laminated and partly joined. The electromagnetic steel sheet 100 in this embodiment includes an electromagnetic steel sheet 10 and an electromagnetic steel sheet 20 as shown in FIG. 18. Herein, the electromagnetic steel sheet 10 is a first main steel and the electromagnetic steel sheet 20 is a second main steel. The electromagnetic steel sheets 10 and 20 are joined through a nonmagnetic alloy layer 110 formed so as to be embedded between them. That is, the nonmagnetic alloy layer 110 and the electromagnetic steel sheet 10 are joined to each other through their contact surfaces. The nonmagnetic alloy layer 110 and the electromagnetic steel sheet 20 are also joined to each other through their contact surfaces. However, the contact surfaces of the electromagnetic steel sheet 10 and the electromagnetic steel sheet 20 are not joined.

In the electromagnetic steel sheet 100 having the nonmagnetic portion in this embodiment, the electromagnetic steel sheets 10 and 20 can form effective magnetic paths. The nonmagnetic alloy layer 110 does not form the effective magnetic path. Accordingly, in the nonmagnetic portion X, only thin main steel layers of the electromagnetic steel sheets 10 and 20 in which the nonmagnetic alloy layer 110 is embedded can form the effective magnetic paths. Thus, magnetic flux leakage can be restrained.

In the electromagnetic steel sheet 100 having the nonmagnetic portion in this embodiment, the nonmagnetic alloy layer 110 has a high electric resistance. Specifically, the nonmagnetic alloy layer 110 is higher in electric resistance and magnetic resistance than the electromagnetic steel sheets 10 and 20 which are the main steels.

The nonmagnetic alloy layer 110 also has a higher electric resistivity than each nonmagnetic alloy layer 2 in the first to third embodiments. The nonmagnetic alloy layer 110 has a magnetic resistance almost equal to that of each nonmagnetic alloy layer 2 in the first to third embodiments and a higher electric resistivity than each nonmagnetic alloy layer 2 in the first to third embodiments. The nonmagnetic alloy layer 110 contains Ni, Cr, or other elements in addition to Fe.

A producing method of the electromagnetic steel sheet 100 having the nonmagnetic portion in this embodiment is explained with reference to FIGs. 19 to 26. The electromagnetic steel sheet 10 to be used in the electromagnetic steel sheet 100 in this embodiment is formed with a groove 11 as shown in a lower view in FIG. 19. The electromagnetic steel sheet 20 in an upper view in FIG. 19 has such a shape as to just overlap the electromagnetic steel sheet 10 when the electromagnetic steel sheet 20 is inverted. A groove 21 of the electromagnetic steel sheet 20 is formed in a position corresponding to the groove 11 of the electromagnetic steel sheet 10 when the electromagnetic steel sheet 20 is turned upside down. The groove 21 has a shape the same as or symmetrical to the groove 11.

As shown in FIG. 19, firstly, a high-resistance modifier metal foil 32 and a ferromagnetic metal foil 33 are inserted in the groove 11 of the electromagnetic steel sheet 10 in the lower view so that the ferromagnetic metal foil 33 is placed on an upper side. The high-resistance modifier metal foil 32 is accordingly sandwiched between the ferromagnetic metal foil 33 and the electromagnetic steel plate 10. On the other hand, a high-resistance modifier metal foil 32 and a ferromagnetic metal foil 33 are similarly inserted in the groove 21 of the electromagnetic steel sheet 20 in the upper view. It is to be noted that the high resistance modifier metal foil 32 and the ferromagnetic metal foil 33 may be joined in advance into one piece.

The high-resistance modifier metal foil 32 is an alloy forming material made of the kinds of metals capable of stabilizing an austenite phase in Fe or its alloy. For example, an Ni-Cr alloy may be used. The high-resistance modifier metal foil 32 has a higher electric resistance than each modifier metal foil 14 used in the first to third embodiments. The ferromagnetic metal foil 33 is a metal exhibiting ferromagneticity. The melting points of the high-resistance modifier metal foil 32 and the ferromagnetic metal foil 33 are slightly lower than the melting points of the electromagnetic steel sheets 10 and 20.

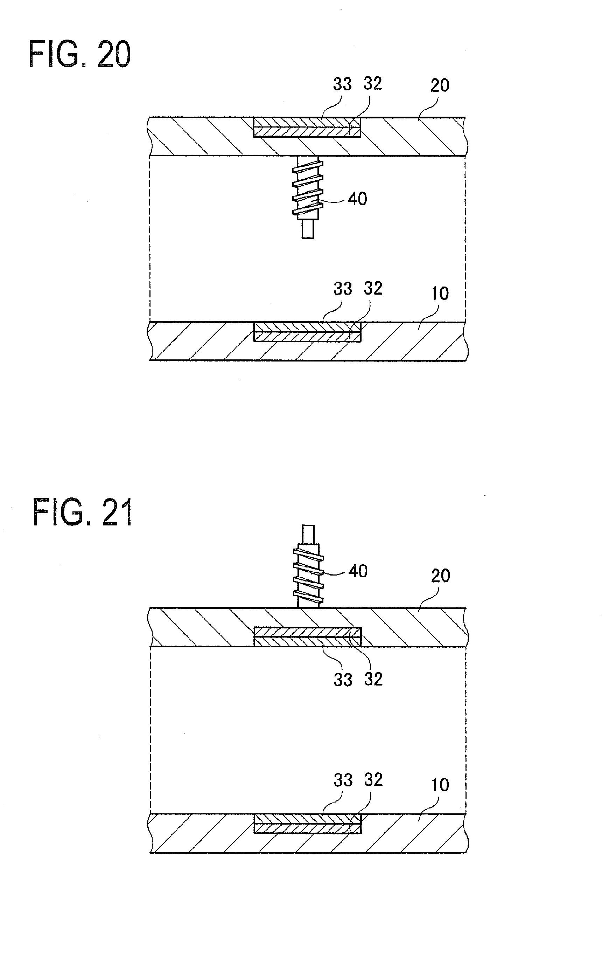

As shown in FIG. 20, the upper surface of the electromagnetic steel sheet 10 in the lower view and the upper surface of the ferromagnetic metal foil 33 inserted in the groove 11 are forming a flush, flat surface. Similarly, the upper surface of the electromagnetic steel sheet 20 in the upper view and the upper surface of the ferromagnetic metal foil 33 are forming a flush, flat surface.

Subsequently, an electromagnet 40 is brought into contact with the electromagnetic steel sheet 20 from below. This state is shown in FIG. 20. To be concrete, the electromagnet 40 is disposed in such a place as to hold the high-resistance modifier metal foil 32 and the electromagnetic steel sheet 20 between the ferromagnetic metal foil 33 and the electromagnet 40. The electromagnet 40 is then turned on. Thus, the ferromagnetic metal foil 33 is attracted to the electromagnet 40. In this state, the high-resistance modifier metal foil 32 and the ferromagnetic metal foil 33 will not separate from the electromagnetic steel sheet 20.

The electromagnetic steel sheet 20 to which the high-resistance modifier metal foil 32 and the ferromagnetic metal foil 33 are fixed by attraction force of the electromagnet 40 is turned upside down as being attracted. FIG. 21 shows such an inverted state. Herein, the ferromagnetic metal foil 33 is attracted upward by the electromagnet 40. Thus, the ferromagnetic metal foil 33 and the high-resistance modifier metal foil 32 do not fall down.

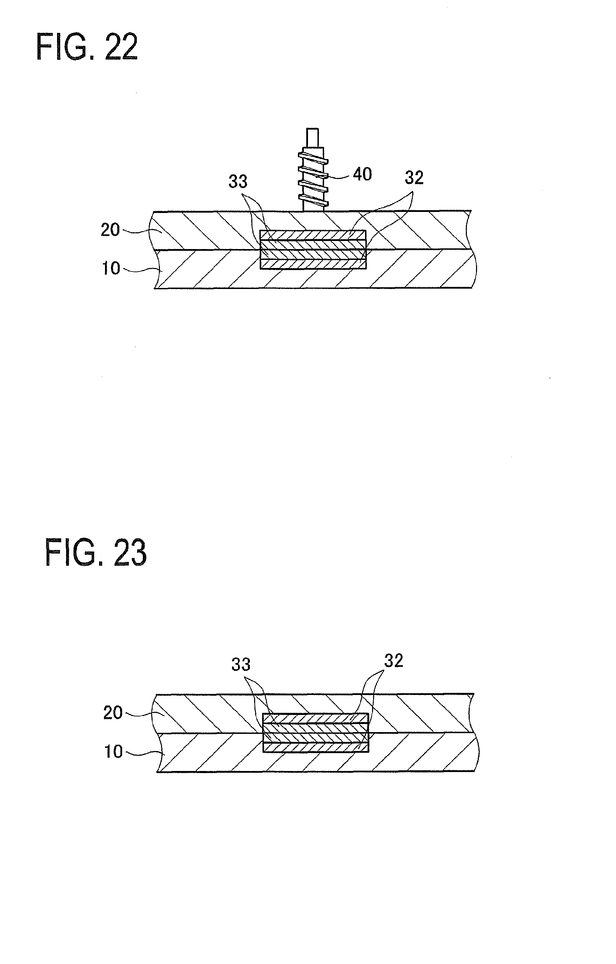

Next, as shown in FIG. 22, the electromagnetic steel sheet 20 turned upside down is brought into contact with the electromagnetic steel sheet 10 from above. Herein, the groove 11 of the electromagnetic steel sheet 10 on a lower side in the figure and the groove 21 of the electromagnetic steel sheet 20 on an upper side in the figure are placed to face each other. Accordingly, the surface of the ferromagnetic metal foil 33 inserted in the groove 11 and the surface of the ferromagnetic metal foil 33 inserted in the groove 21 exactly coincide with each other.

As shown in FIG. 22, the surface of the electromagnetic steel sheet 10 and the surface of the lower ferromagnetic metal foil 33 are flush with each other and the surface of the electromagnetic steel sheet 20 and the surface of the upper ferromagnetic metal foil 33 are flush with each other. Accordingly, the ferromagnetic metal foil 33 inserted in the groove 11 or the ferromagnetic metal foil 33 inserted in the groove 21 will not cause galling or scuffing when the electromagnetic steel sheets 10 and 20 are placed one on the other.

The electromagnet 40 is turned off and then moved apart from the electromagnetic steel sheet 20 as shown in FIG. 23. At that time, a portion in which the high-resistance modifier metal foils 32 and the ferromagnetic metal foils 33 are inserted has a multi-layer structure. Specifically, the portion including the grooves 11 and 21 has a lamination structure in which the electromagnetic steel sheet 10, the high-resistance modifier metal foil 32, the ferromagnetic metal foil 33, the other ferromagnetic metal foil 33, the other high-resistance modifier metal foil 32, and the electromagnetic steel sheet 20 are laminated in this order from below.

Successively, the electromagnetic steel sheets 10 and 20 are sandwiched by the electrodes 15. Specifically, the portion sandwiched between the electrodes 15 is the portion in which the high-resistance modifier metal foils 32 and the ferromagnetic metal foils 33 are inserted in the grooves 11 and 21. When the electromagnetic steel sheets 10 and 20 are sandwiched between the electrodes 15, an electric current is applied between the electrodes 15. The current applying conditions are substantially the same as those in the first embodiment.

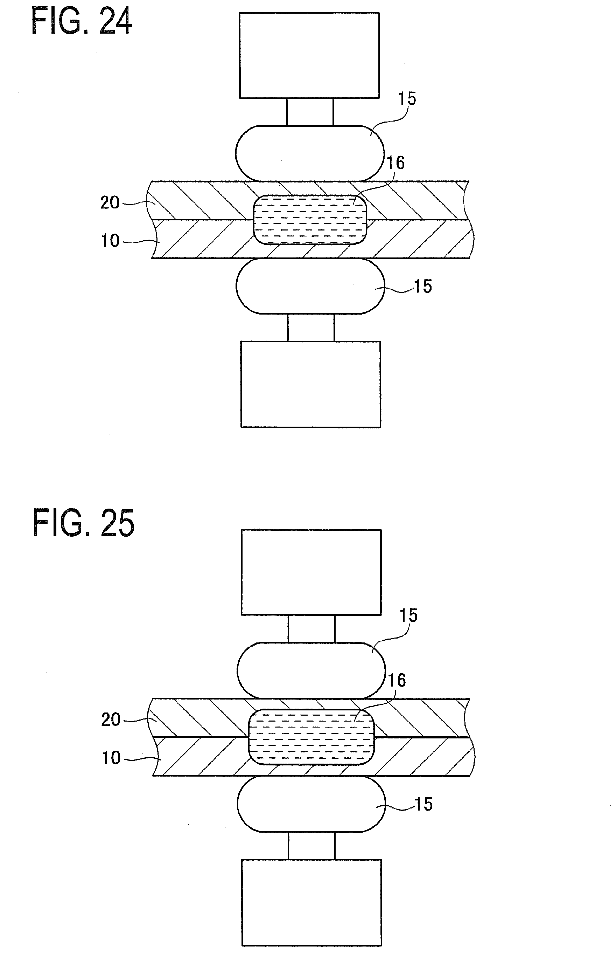

By this pressing and current applying, the high-resistance modifier metal foils 32, the ferromagnetic metal foils 33, the vicinity of the groove 11 of the electromagnetic steel sheet 10, and the vicinity of the groove 21 of the electromagnetic steel sheet 20 begin to melt. Because of contact resistance, the vicinity of each of the grooves 11 and 21 and contact surfaces with other members begin to melt first as with the process shown in FIGs. 6 to 8. FIG. 24 shows that the high-resistance modifier metal foils 32 and the ferromagnetic metal foils 33 have melted together with parts of the electromagnetic steel sheets 10 and 20.

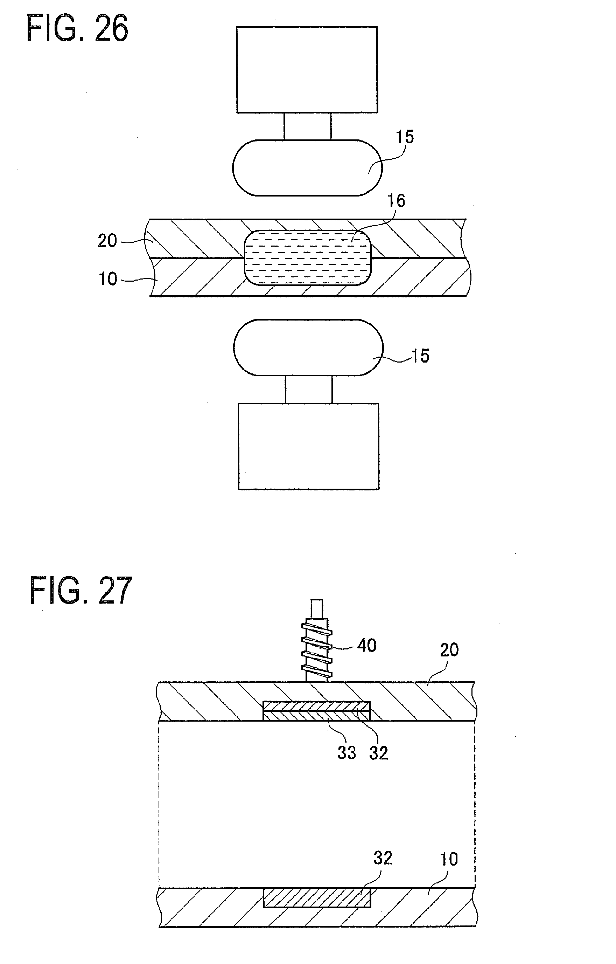

A liquid portion 16 spreads by current application as shown in FIG. 25. After the end of current application, sequentially, the electrodes 15 are moved apart from the electromagnetic steel sheets 10 and 20, as shown in FIG. 26. The liquid portion 16 then solidifies. Thus, the electromagnetic steel sheet 100 having the nonmagnetic portion is produced (see FIG. 18).

A modified example of the electromagnetic steel sheet 100 in this embodiment will be explained below. In the above embodiment, the ferromagnetic metal foils 33 are inserted in the groove 11 of the electromagnetic steel sheet 10 and the groove 21 of the electromagnetic steel sheet 20 respectively. As an alternative, the ferromagnetic metal foil 33 may be inserted in only the groove 21 as shown in FIG. 27. This is because the high-resistance modifier metal foil 32 inserted in the groove 21 of the electromagnetic steel sheet 20 can similarly be pressed against the electromagnetic steel sheet 20.

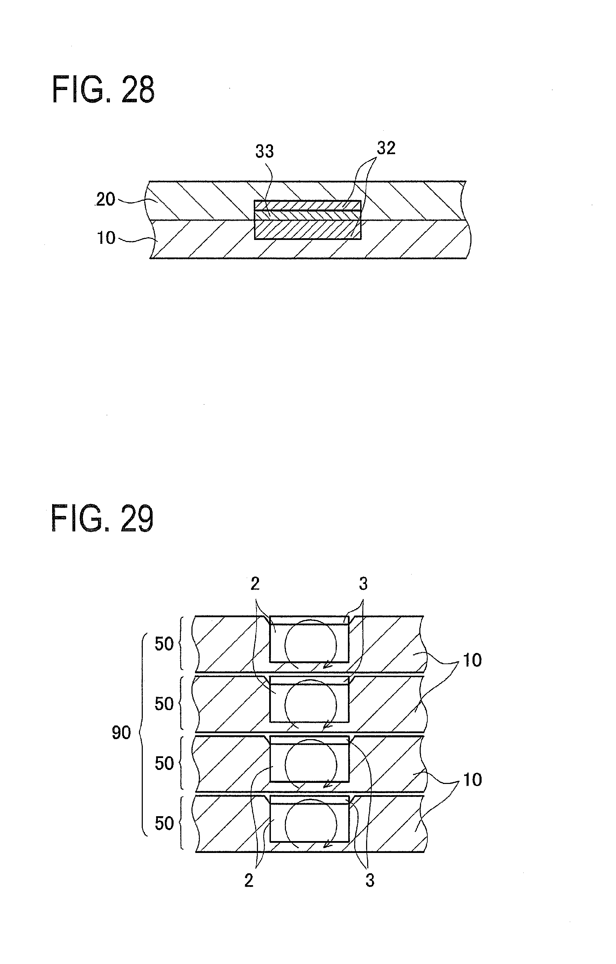

In this case, a state before pressing and current application are performed by the electrodes is shown in FIG. 28. As another alternative, the high-resistance modifier metal foil 32 in FIG. 27 is not provided in the groove 11 of the electromagnetic steel sheet 10. In such a case, the size of the high-resistance modifier metal foil 32 or the ferromagnetic metal foil 33 inserted in the groove 21 of the electromagnetic steel sheet 20 has only to be increased.

Herein, the following explanation is given to comparison of eddy current generated in the electromagnetic steel sheet 50 having the nonmagnetic portion in the first embodiment explained above and the electromagnetic steel sheet 100 having the nonmagnetic portion in this embodiment. The eddy current is an eddy current generated in metal by electromagnetic induction effect. This eddy current is also generated in an electromagnetic steel sheet of a rotor during use of a motor. Accordingly, the rotor generates heat, leading to energy loss. This energy loss is called an eddy current loss. The motor is therefore desired to reduce this eddy current loss as much as possible.

The eddy current loss is represented by the following expression:

$$Pe = ke \cdot (t \cdot f \cdot Bm)^2 / \rho \qquad (1)$$

Pe: Eddy current loss
ke: Proportionality constant
t: Thickness of electromagnetic steel sheet
f: Frequency
Bm: Maximum magnetic flux density
p: Electric resistance of electromagnetic steel sheet

That is, the eddy current loss Pe is proportional to square of the thickness of the electromagnetic steel sheet and inversely proportional to the electric resistivity of the electromagnetic steel sheet.

FIG. 29 is a view showing the rotor 90 in the first to third embodiments. Only four of the electromagnetic steel sheets 50 laminated are illustrated. As indicated by arrows in FIG. 29, the eddy current is generated in each nonmagnetic portion of the electromagnetic steel sheets 50. Each electromagnetic steel sheet is thin and hence the eddy current is small, that is, the eddy current loss is also small.

FIG. 30 is a view showing the rotor 190 in the present embodiment. Herein, the eddy current generated in each nonmagnetic portion X is small. According to the expression (1), the eddy current increases by the square of the thickness. However, the electromagnetic steel sheet 100 in the present embodiment is large in electric resistance in the nonmagnetic alloy layer 110. The eddy current loss is therefore almost equal to that in the rotor 90 in the first embodiment. The eddy current loss caused by the eddy current generated in the portion other than the nonmagnetic portion X is equal to that in the rotor 90.

Herein, a concrete example of the electric resistance of the nonmagnetic alloy layer 110 will be explained. Table 1 shows an example using Ni and Cr alloys as the high-resistance modifier metal foil 32 and Ni as the ferromagnetic metal foil 33. The electric resistance of the Ni and Cr alloys is very larger than that of Ni. Accordingly, the electric resistance of the nonmagnetic alloy layer 110 simultaneously containing both the Ni and Cr alloys as modifier metal is higher than that of the nonmagnetic alloy layer 110 containing only Ni.

Table 1

| | Metal used | Resistance value of Metal used | Resistance value after transformation into nonmagnetic form |
|---|---|---|---|
| Modifier metal foil | Ni | 6.8 $\mu\Omega$ cm | 22 $\mu\Omega$ cm |
| High-resistance Modifier metal foil | Ni-Cr | 108 $\mu\Omega$ cm | 109 $\mu\Omega$ cm |
| Frromagnetic metal foil | Ni | 6.8 $\mu\Omega$ cm | 22 $\mu\Omega$ cm |

According to the expression (1), if the thickness is doubled, the eddy current loss is quadrupled. On the other hand, Table 1 shows that the electric resistance of the nonmagnetic alloy layer 110 is 109 $\mu\Omega$ cm, which is the quadruple or more of 22 $\mu\Omega$ cm that is the resistance value of an alloy unmagnetized from an ordinary modifier metal foil 31. Thus, the eddy current loss in the rotor 190 in the present embodiment is almost equal to that in the rotor 90.

FIG. 31 shows another rotor 290 different from the rotor 190. The rotor 290 employs a modifier metal foil made of only Ni. The electric resistance of each nonmagnetic alloy layer 210 is 22 $\mu\Omega$ cm as seen in Table 1. Accordingly, the eddy current loss is larger than that in the rotors 90 and 190.

The electromagnetic steel sheet 100 in the present embodiment is made by partly joining two electromagnetic steel sheets while forming the nonmagnetic alloy layer 110 therebetween. Thus, the portions contacted by the electrodes 15 are both the main steel layers. Therefore, the unjoined portion(s) 94 mentioned in the third embodiment is not generated. Since the nonmagnetic portion X is formed in a desired portion of the electromagnetic steel sheet 100, the magnetic flux paths can be ensured. In other words, it is possible to restrain ineffective magnetic flux from occurring.

Furthermore, the eddy current loss also does not increase.

The rotor 190 in the present embodiment is formed by laminating a number of the electromagnetic steel sheets 100 each having the nonmagnetic portion. The rotor 190 in this embodiment can therefore ensure the strength of each electromagnetic steel sheet while preventing an increase in energy loss by eddy current and also restrain the generation of ineffective magnetic flux.

As the details are explained above, the electromagnetic steel sheet 100 having the nonmagnetic portion to be used in the rotor 190 in the present embodiment is produced by partly joining two electromagnetic steel sheets while forming the nonmagnetic alloy layer 110 therebetween. The electromagnetic steel sheet 100 having the nonmagnetic portion in this embodiment allows the electromagnetic steel sheets 10 and 20 to form effective magnetic paths, while not allowing the nonmagnetic alloy layer 110 to form effective magnetic paths. Since the portions from which heat is removed by the electrodes 15 are both main steel layers, no unjoined portions 94 are caused. Consequently, the nonmagnetic alloy layer 110 is formed in a desired place and thus an electromagnetic steel sheet capable of ensuring strength and effective magnetic paths can be achieved.

The electromagnetic steel sheet 100 having the nonmagnetic portion in the present embodiment has a high volume resistivity in its nonmagnetic alloy layer 110. In other words, the nonmagnetic alloy layer 110 has a higher electric resistance and a higher magnetic resistance than other portions than the nonmagnetic alloy layer. In the case of employing the electromagnetic steel sheet 100 in this embodiment in the rotor, accordingly, it is possible to restrain energy loss by the eddy current and loss of effective magnetic flux by the magnetic flux leakage.

It is to be understood that the present embodiment shows a mere example and does not limit the invention, and various changes and modifications may be made without departing from the scope of the invention. For instance, the shape of each of the high-resistance modifier metal foil 32, the ferromagnetic metal foil 33, and each groove may be modified in circular disc. This is to facilitate insertion of the high-resistance modifier metal foil 32 and the ferromagnetic metal foil 33 without needing a change in positioning even when they rotate.

It is further preferable to reduce a difference (ΔT) in melting point among the high-resistance modifier metal foil 32, the ferromagnetic metal foil 33, and the electromagnetic steel sheet, as with the second embodiment, thereby to facilitate control of the size of the region of the nonmagnetic portion X. In the case of employing the electromagnetic steel sheet having the nonmagnetic portion in the rotor 190, the nonmagnetic portion X is preferably provided in each of the peripheral bridge portions 92 and the central bridge portion 93 as with the third embodiment.

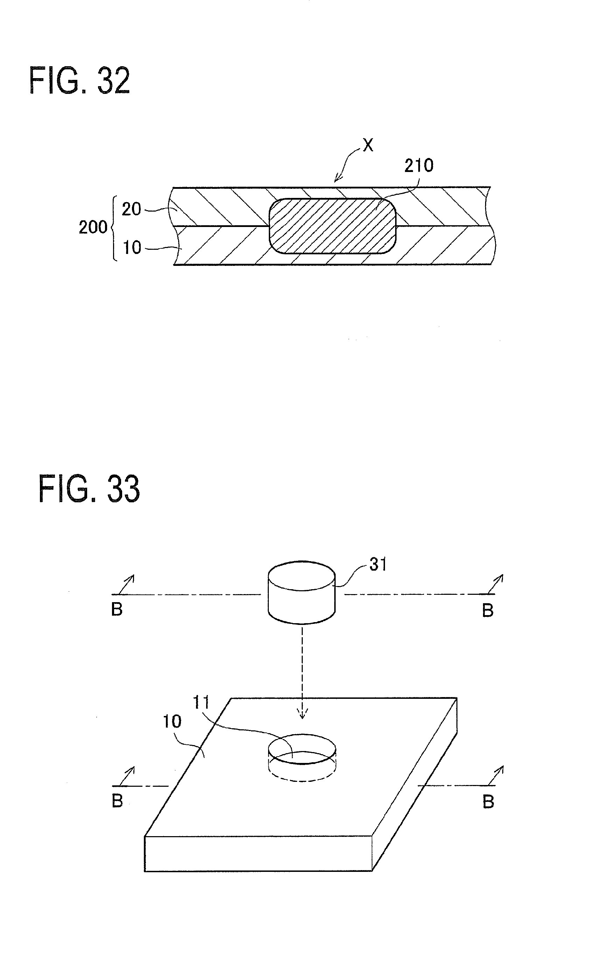

Instead of the high-resistance modifier metal foil 32, the modifier metal foil 14 in the first embodiment shown in FIG. 3 may be used. The electromagnetic steel sheet 200 manufactured in this case is shown in FIG. 32. In such a case, the electric resistance of the nonmagnetic alloy layer 210 of the electromagnetic steel sheet 200 is not so high. In this case, the ferromagnetic metal foil 33 is not required if the modifier metal foil 14 is ferromagnetic. Even the modifier metal foil 14 alone is enough for the metal foil to be inserted in the groove. A permanent magnet also may be used instead of the electromagnet.

(Fifth Embodiment)

A fifth embodiment of the invention will be explained below. Rotors 190 and 290 in this embodiment are identical to those in the fourth embodiment. Each of electromagnetic steel sheets 100 and 200 to be used in the rotor is similarly produced by partly two electromagnetic steel sheets while forming a nonmagnetic alloy layer therebetween, as with the fourth embodiment. The nonmagnetic alloy layer is joined with an electromagnetic steel sheet 10 which is a first main steel and with an electromagnetic steel sheet 20 which is a second main steel through their contact surfaces. However, the electromagnetic steel sheets 10 and 20 are not joined with each other through their contact surfaces. Accordingly, as with the fourth embodiment, no unjoined portions 94 are generated. A difference from the fourth embodiment is in a producing method of the electromagnetic steel sheets 100 and 200.

Herein, a producing method of the electromagnetic steel sheets 100 and 200 each having the nonmagnetic portion in this embodiment will be explained referring to FIGs. 33 to 38. As shown in FIG. 33, firstly, the modifier metal foil 31 is inserted in the groove 11 of the electromagnetic steel sheet 10. The modifier metal foil 31 is made of the same material as the modifier metal foil 14 in the first embodiment but has a circular disc-like shape differently from the modifier metal foil 14. Accordingly, the groove 11 also has a circular shape.

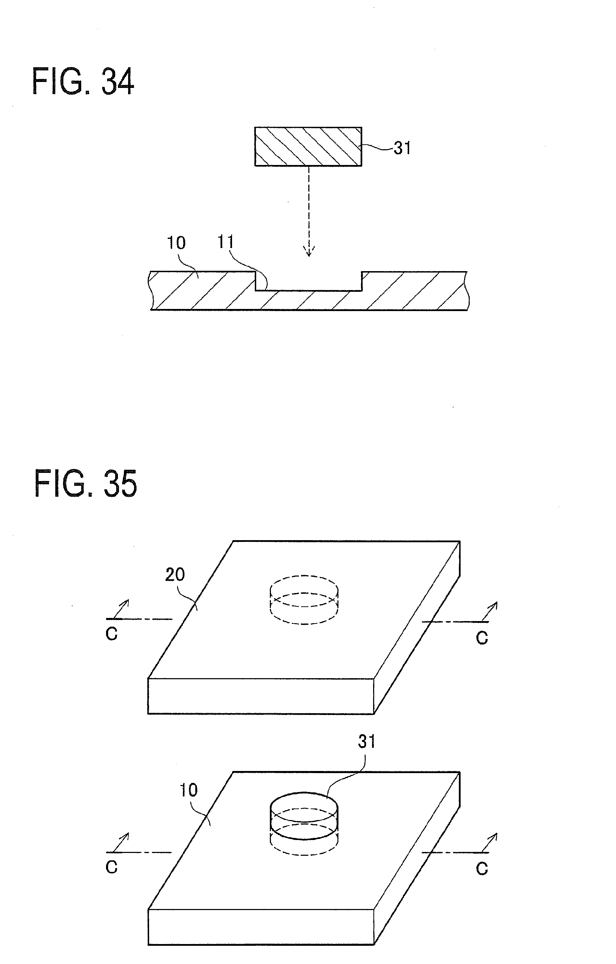

This shape is a mere example and may be any other shape if only it has a uniform depth. The depth of the groove 11 is about half the thickness of the electromagnetic steel sheet 10. The thickness of the modifier metal foil 31 is double the depth of the groove 11. FIG. 34 shows a sectional view taken along a line B-B in FIG. 33.

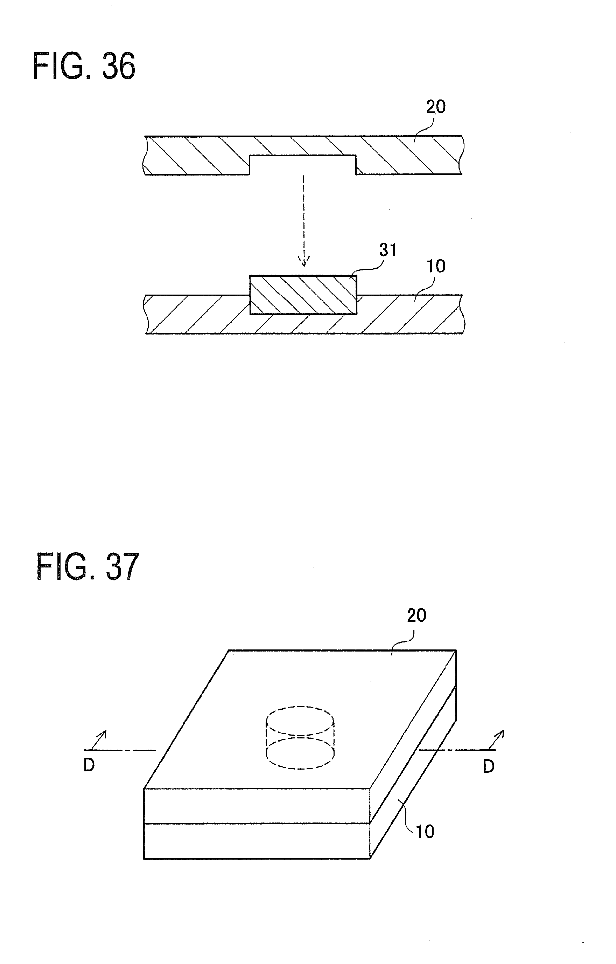

As shown in FIG. 35, successively, the electromagnetic steel sheet 20 is put from above on the electromagnetic steel sheet 10 in the groove 11 of which the modifier metal foil 31 is inserted. FIG. 36 shows a sectional view taken along a line C-C in FIG. 35. An upper half of the modifier metal foil 31 protruding from the upper surface of the electromagnetic steel sheet 10 is inserted into the groove 21 of the electromagnetic steel sheet 20 on an upper side in the figure.

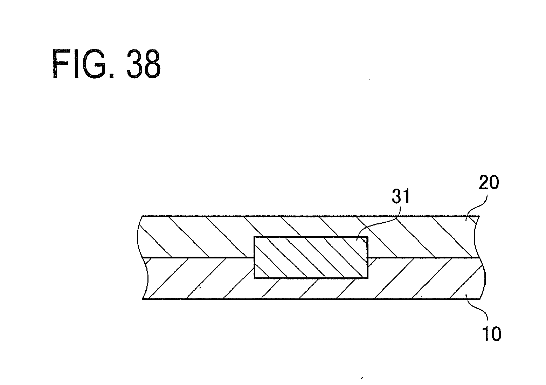

As shown in FIG. 37, the modifier metal foil 31 is just fitted between the electromagnetic steel sheet 10 and the electromagnetic steel sheet 20. Herein, FIG. 38 shows a sectional view taken along a line D-D in FIG. 37. Specifically, the cavity defined by the grooves 11 and 21 coincides with the outer shape of the modifier metal foil 31. The upper surface of the electromagnetic steel sheet 10 and the lower surface of the electromagnetic steel sheet 20 make contact with each other outside the grooves 11 and 21.

Subsequently, the electromagnetic steel sheets 10 and 20 are sandwiched by the electrodes 15. The portion sandwiched by the electrodes 15 is the portion in which the modifier metal foil 31 is inserted. After the electromagnetic steel sheets 10 and 20 are held between the electrodes 15, an electric current is applied between the electrodes 15 while pressing the electrodes 15 to the electromagnetic steel sheets 10 and 20. The current applying conditions are almost the same as those in the first embodiment, excepting that the applying time that needs to be changed according to the thicknesses and others of the electromagnetic steel sheet 10, the electromagnetic steel sheet 20, and the modifier metal foil 31. Accordingly, the modifier metal foil 31, the vicinity of the groove 11 of the electromagnetic steel sheet 10, and the vicinity of the groove 21 of the electromagnetic steel sheet 20 begin to melt. Because of contact resistance, the vicinity of each of the grooves 11 and 21 begins to melt first in the same way as the process shown in FIGs. 6 to 8. FIG. 24 shows that the modifier metal foil 31 has melted together with parts of the electromagnetic steel sheets 10 and 20.

By further continuing pressing and current applying, metal atoms of the electromagnetic steel sheets 10 and 20 in the vicinity of the contact surfaces with the liquid portion 16 melt into the molten metal. The liquid portion 16 further spreads, accordingly. This state is shown in FIG. 25. When the liquid portion 16 spreads to a sufficient size, the current application is stopped. The electrodes 15 are then moved apart from the electromagnetic steel sheets 10 and 20 as shown in FIG. 26. The liquid portion 16 thereafter solidifies. As above, the electromagnetic steel sheet 200 having the nonmagnetic portion is produced.

As with the second embodiment, it is further preferable to reduce a difference (T$\Delta$) between the melting points of the modifier metal foil 31 and the electromagnetic steel sheets. This is to facilitate control of the size of the region of the nonmagnetic portion X. In the case where the electromagnetic steel sheet having the nonmagnetic portion is used in the rotors 190 and 290, the nonmagnetic portion X is preferably provided in each of the peripheral bridge portion(s) 92 and the central bridge portion 93 in the same manner as in the third embodiment.

The electromagnetic steel sheet 200 having the nonmagnetic portion in this embodiment includes the modifier metal foil 31. Instead of the modifier metal foil 31, the high-resistance modifier metal foil 32 may be used. In this case, the nonmagnetic alloy layer of the electromagnetic steel sheet has a high electric resistance. This configuration also can prevent the energy loss due to the eddy current as with the fourth electromagnetic.

The rotor in this embodiment is configured by laminating a number of the electromagnetic steel sheets each having the nonmagnetic portion. Consequently, the rotor can be achieved capable of ensuring the strength of the electromagnetic steel sheets and preventing the generation of ineffective magnetic flux.

As the details are explained above, the electromagnetic steel sheet having the nonmagnetic portion to be used in the rotor in this embodiment is configured by partly joining two electromagnetic steel sheets while forming the nonmagnetic alloy layer therein. The electromagnetic steel sheet having the nonmagnetic portion in this embodiment allows the electromagnetic steel sheets 10 and 20 to form effective magnetic paths. On the other hand, the nonmagnetic alloy layer does not form the effective magnetic path. Since the portions from which heat is removed by the electrodes 15 are both main steel layers, no unjoined portions 94 are caused. Consequently, the nonmagnetic alloy layer is formed in a desired place and thus an electromagnetic steel sheet capable of ensuring strength and effective paths can be achieved.

It is to be understood that the present embodiment shows a mere example and does not limit the invention, and various changes and modifications may be made without departing from the scope of the invention. For instance, the two electromagnetic steel sheets are combined into one in this embodiment but three or more electromagnetic steel sheets may be laminated together. In this case, an uppermost one and a lowest one of three or more electromagnetic steel sheets are formed with grooves and an intermediate electromagnetic steel sheet(s) are provided with a through hole(s). Another alternative is to embed a modifier metal foil in the second electromagnetic steel sheet and sandwich it by the uppermost and the lowest electromagnetic steel sheets directly for conducting pressing and current application for modification.

The electromagnetic steel sheet having the nonmagnetic portion of the invention is not limited to the electromagnetic steel sheet but is applicable to any steel having a nonmagnetic portion.

## Claims

1. A steel having a nonmagnetic portion, wherein
   the nonmagnetic portion comprising:

   a surface steel layer placed on a front surface side; and
   a nonmagnetic alloy layer placed under the surface steel layer,

a remaining portion of the nonmagnetic portion is a main steel layer constituted of the same material and structure as portions of the steel other than the nonmagnetic portion, and
the main steel layer in the nonmagnetic portion has a thickness thinner than the total thickness of the steel in the portions other than the nonmagnetic portion.

2. The steel having the nonmagnetic portion according to claim 1, wherein the surface steel layer is an austenite stainless steel layer.

3. The steel having the nonmagnetic portion according to claim 1, wherein a first main steel and a second main steel are laminated,
the first main steel includes the main steel layer,
the second main steel includes the surface steel layer, and
the nonmagnetic alloy layer is formed to be embedded in both the first main steel and the second main steel.

4. A steel having a nonmagnetic portion, wherein
a first main steel and a second main steel are laminated,
the nonmagnetic portion is internally formed with a nonmagnetic alloy layer, and
the nonmagnetic alloy layer is formed to be embedded in both the first main steel and the second main steel.

5. The steel having the nonmagnetic portion according to claim 4, wherein the first main steel and the second main steel have a symmetrical shape with respect to respective mating surfaces.

6. The steel having the nonmagnetic portion according to any one of claims 3 to 5, wherein
the nonmagnetic alloy layer has a volume resistivity larger than both a volume resistivity of the first main steel and a volume resistivity of the second main steel.

7. The steel having the nonmagnetic portion according to any one of claims 1 to 6, wherein
the nonmagnetic alloy layer is an alloy layer of an austenite phase containing an element capable of raising a melting point of the alloy layer.

8. A revolving electric core having a nonmagnetic portion, wherein
the nonmagnetic portion comprising:

a surface steel layer placed on a front surface side; and
a nonmagnetic alloy layer placed under the surface steel layer,
a remaining portion of the nonmagnetic portion is a main steel layer constituted of the same material and structure as portions of the steel other than the nonmagnetic portion, and
the main steel layer in the nonmagnetic portion has a thickness thinner than the total thickness of the steel in the portions other than the nonmagnetic portion.

9. The revolving electric core according to claim 8, wherein
a plurality of magnet mounting holes are formed,
the nonmagnetic portion is located between adjacent ones of the magnet mounting holes, and
a portion at a shortest distance between the adjacent mounting magnet holes is located in the nonmagnetic portion.

10. The revolving electric core according to claim 8, wherein
a magnet mounting hole is formed,
the nonmagnetic portion is located between the magnet mounting hole and an outer peripheral edge of the core, and
a portion at a shortest distance between the magnet mounting hole and the outer peripheral edge is located in the nonmagnetic portion.

11. A revolving electric core having a nonmagnetic portion, wherein the revolving electric core is configured by a lamination of steels each including a first main steel and a second main steel that are laminated,
the nonmagnetic portion is internally formed with a nonmagnetic alloy layer, and
the nonmagnetic alloy layer is formed to be embedded in both the first main steel and the second main steel.

12. The revolving electric core having the nonmagnetic portion according to claim 11, wherein
the nonmagnetic alloy layer has a volume resistivity larger than both a volume resistivity of the first main steel and a volume resistivity of the second main steel.

13. A producing method of a steel having a nonmagnetic portion, comprising the steps of:

inserting a cover steel and an alloy forming material that will form a nonmagnetic alloy in cooperation with Fe into a recess formed in a main steel so that the cover steel is placed as an upper layer, and applying electric current at the inserted portion to melt the alloy forming material together with a part of the main steel and a part of the cover steel to form a nonmagnetic alloy layer between a remaining part of the main steel and a remaining part of the cover steel.

14. The producing method of the steel having the nonmagnetic portion according to claim 13, wherein the cover steel is an austenite stainless steel.

15. The producing method of the steel having the nonmagnetic portion according to claim 13 or 14, wherein the current application is conducted while a contact surface of an electrode on the side of the cover steel is in contact with only the cover steel.

16. A producing method of a steel having a nonmagnetic portion, comprising the steps of:

laminating a plurality of steels including a first main steel and a second main steel each of which is provided with a recess in one surface so that the first and second main steels are located in both end places, the recess of the first main steel and the recess of the second main steel face each other, and an alloy forming material is disposed in a cavity defined by the recesses, and applying electric current at a portion of the recesses to melt the alloy forming material together with a part of the steels surrounding the alloy forming material to form a nonmagnetic alloy layer between a remaining part of the first main steel and a remaining part of the second main steel.

17. The producing method of the steel having the nonmagnetic portion according to claim 16, wherein two, the first and the second main steels, are laminated.

18. The producing method of the steel having the nonmagnetic portion according to claim 16 or 17, wherein an alloy forming material is inserted in the recess of the first main steel and another alloy forming material is inserted in the recess of the second main steel, and the first and second main steels are laminated.

19. The producing method of the steel having the nonmagnetic portion according to claim 18, comprising the steps of:

inserting the alloy forming material in each of the recesses of the first and second main steels so that their recesses are placed to face upward, and inserting a ferromagnetic metal together with the alloy forming material in at least the recess of the second main steel so that the ferromagnetic metal is placed on the alloy forming material, placing a magnet under the recess of the second main steel to stick the second main steel and the alloy forming material together by the magnet and the ferromagnetic metal, and turning the second main steel upside down, and laminating the second main steel and the first main steel.

20. The producing method of the steel having the nonmagnetic portion according to any one of claims 13 to 19, wherein the alloy forming material contains an element capable of raising a melting point of the alloy forming material.

## FIG. 1

## FIG. 2

# FIG. 3

# FIG. 4

# FIG. 5

FIG. 6

FIG. 7

FIG. 8

FIG. 9

FIG. 10

FIG. 11

## FIG. 12

## FIG. 13

## FIG. 14

## FIG. 15

## FIG. 16

## FIG. 17

# FIG. 18

# FIG. 19

FIG. 20

FIG. 21

## FIG. 22

## FIG. 23

FIG. 24

FIG. 25

## FIG. 26

## FIG. 27

FIG. 28

FIG. 29

## FIG. 30

## FIG. 31

FIG. 32

FIG. 33

# FIG. 34

# FIG. 35

## FIG. 36

## FIG. 37

FIG. 38

<table>
<tr><td colspan="2" align="center">**INTERNATIONAL SEARCH REPORT**</td><td colspan="2">International application No.<br>PCT/JP2008/065238</td></tr>
</table>

A.  CLASSIFICATION OF SUBJECT MATTER
*H02K1/06*(2006.01)i, *H02K21/14*(2006.01)i

According to International Patent Classification (IPC) or to both national classification and IPC

B.  FIELDS SEARCHED

Minimum documentation searched (classification system followed by classification symbols)
H02K1/06, H02K21/14

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2004-91842 A  (Hitachi Metals, Ltd.),<br>25 March, 2004 (25.03.04),<br>Full text; Figs. 1, 2<br>(Family: none) | 1-12 |
| Y | JP 4-42513 A  (Matsushita Electric Industrial<br>Co., Ltd.),<br>13 February, 1992 (13.02.92),<br>Full text; Figs. 1, 4<br>(Family: none) | 1-12 |
| Y | JP 3507395 B2  (Hitachi, Ltd.),<br>15 March, 2004 (15.03.04),<br>Full text; Figs. 1 to 3, 8 to 11<br>& US 2001/0026108 A1    & EP 1130746 A1 | 2,7 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered  to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>20 November, 2008 (20.11.08) | Date of mailing of the international search report<br>02 December, 2008 (02.12.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/065238 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 8-256456 A  (Toshiba Machine Co., Ltd.),<br>01 October, 1996 (01.10.96),<br>Full text; Fig. 1<br>(Family: none) | 3-7,11,12 |
| Y | JP 2002-171702 A  (Isuzu Motors Ltd.),<br>14 June, 2002 (14.06.02),<br>Full text; Figs. 1, 7, 14, 19<br>(Family: none) | 9 |
| A | JP 2002-69593 A  (Hitachi, Ltd.),<br>08 March, 2002 (08.03.02),<br>Full text; Figs. 1 to 5<br>(Family: none) | 1-20 |

Form PCT/ISA/210 (continuation of second sheet) (April 2007)

**REFERENCES CITED IN THE DESCRIPTION**

**Patent documents cited in the description**

•  JP 3507395 B

•  JP 2001093717 A